# EUROPEAN PATENT SPECIFICATION

(11) **EP 0 392 550 B1**
(45) Date of publication and mention of the grant of the patent: **18.12.1996**
(21) Application number: 90107077.1
(22) Date of filing: 12.04.1990
(51) Int. Cl.: F02B 15/00, F02M 69/10, F02M 69/08

(54) **Internal combustion engine and method for controlling fuel injection of same**
Brennkraftmaschine und Verfahren zur Kraftstoffeinspritzregelung dafür
Moteur à combustion interne et procédé pour commander son injection de combustible

(30) Priority: 13.04.1989 JP 91962/89; 28.04.1989 JP 107598/89
(43) Date of publication of application: 17.10.1990
(73) Proprietor: YAMAHA HATSUDOKI KABUSHIKI KAISHA, Iwata-shi Shizuoka-ken, 438 (JP)
(72) Inventor: Motoyama, Yu, Hamamatsu-shi, Shizuoka-ken (JP); Kato, Ryusuke, Iwata-shi, Shizuoka-ken (JP); Moriya, Yoshihiko, Fukuroi-shi, Shizuoka-ken (JP)
(74) Representative: Grünecker, Kinkeldey, Stockmair & Schwanhäusser Anwaltssozietät

(56) References cited:
- EP-A- 0 071 776
- WO-A-87/00578
- DE-A- 3 113 936
- DE-C- 903 518
- FR-A- 1 415 194
- FR-A- 2 121 177
- FR-A- 2 321 044
- GB-A- 1 336 797
- GB-A- 2 005 348
- GB-A- 2 059 503
- GB-A- 2 128 675
- GB-A- 2 182 096
- US-A- 2 758 576
- US-A- 3 980 058
- US-A- 4 232 638
- US-A- 4 463 740
- US-A- 4 465 050
- US-A- 4 694 808
- US-A- 4 779 581
- PATENT ABSTRACTS OF JAPAN, vol. 12, no. 31 (M-663), 29th January 1988; & JP-A-62 186 061 (TOYOTA) 14-08-1987
- PATENT ABSTRACTS OF JAPAN, vol. 4, no. 76 (M-14)[558], 3rd June 1980; & JP-A-55 37 525 (HITACHI) 15-03-1980
- PATENT ABSTRACTS OF JAPAN, vol. 9, no. 117 (M-381)[1840], 22nd May 1985; & JP-A-60 3459 (HONDA) 09-01-1985

## Description

The present invention relates to an internal combustion engine, specifically a two-stroke cycle engine, as claimed in the preamble portion of Claim 1. Moreover, the invention relates to a control method for controlling the mode of fuel injection as claimed in Claim 52. More particularly, the invention is intended to be used for two-stroke internal combustion gasoline engines usually to be mounted on vehicles such as motorcycles or on watercrafts which are driven by outboard marine engines of such kind, although the invention can also be used for the design of 4-stroke cycle engines.

An engine of the type mentioned above is known from US-A-4 779 581 wherein a first injector injects fuel directly into the cylinder and a second injector is arranged in the intake duct. The injectors are operated in such manner that at low or mid range speed, the first injector is activated while the second injector remains passive whereas at high speed or high load only the second injector is activated.

Another engine operating according to a qualitative control concept is known from US-A-2 758 576 showing a main fuel injection unit and a sub fuel injection unit. The quantity of fuel supplied by the main fuel injection unit is held substantially constant. The total amount of fuel supplied to the combustion chamber is regulated by a second fuel supply unit in the intake duct.

In order to stabilize combustion and to improve the atomization of the fuel injected into the combustion chamber of an engine, it is known to premix the fuel to be injected with pressurized air beforehand, injecting an air/fuel mist into the combustion chamber (DE-A-903 518). A similar system aiming to stabilize combustion is known from Japanese provisional patent publication S62-93481.

However, with a such a system, since fuel is directly supplied into the combustion chamber of the engine by a fuel injection unit and it is only air that is supplied through the air intake passage leading to the crankcase, sufficient cooling of the back of the piston by fuel cannot be expected and difficulties arise to improve durability of the engine. Specifically, in the case of a two-stroke engine having scavenging ports which are opened and closed by the piston, the cooling of the piston becomes unacceptable. On the other hand, it is well known that, in a type of a two-stroke engine in which fuel is supplied to its combustion chamber through the air intake passage thereof, the back of the piston will be sufficiently cooled by the fuel supplied into the crankcase and, thus, the durability of the engine will be improved. With such a system, however, difficulties have arisen to provide an appropriate amount of fuel at appropriate timing in the high speed and/or high load operating range of the engine.

Accordingly, the objective of the present invention is to provide an improved, compact and lightweight internal combustion engine of high performance and low fuel consumption, having improved piston cooling capabilities and ensuring stabilized combustion under all operating conditions, in particular, in the upper region of engine performance.

Moreover, the present invention aims to provide an improved control method for the amount and timing of fuel injection taking different load conditions of the engine into consideration.

The afore-indicated objectives are achieved by the features as set out in the characterizing portion of Claim 1 and as set out in Claim 52, respectively.

Preferred embodiments of the present invention are laid down in the subclaims.

Thus, in the internal combustion engine, in particular two-stroke cycle gasoline engine, according to the present invention, the additional fuel supplied by the sub-fuel injection unit only when the throttle valve opening or another load characterizing parameter of the engine running conditions exceeds a predetermined value flows into the cylinder through the scavenging port mixed with the intake air and, thus, the fuel contained in the mixture contacts the piston and is effective as a cooling medium for cooling the piston. Moreover, appropriate timing and pressurization of the fuel injected through the main fuel injection unit, and under increased speed and/or load, injected additionally through the sub-fuel injection unit, is obtained. Preferably, the fuel discharged by a fuel pump is supplied to both the main fuel injection unit injecting fuel directly into the combustion chamber, and to the sub-fuel injection unit injecting fuel into the air intake passage on the crankcase side of the engine, with a fuel pressure of the sub-fuel injection unit being regulated by a second pressure regulator to a lower level than that of the main fuel injection unit which is regulated by a first pressure regulator.

According to a specific embodiment of the present invention, a 2-cycle internal gasoline combustion engine is provided comprising a main fuel injection unit provided with a fuel passage for supplying fuel and an air passage for supplying compressed air in order to inject said fuel in atomized condition, an injection valve for opening and closing these passages facing the combustion chamber of the engine, respectively, to supply fuel to each of said combustion chambers throughout the entire operating range of the engine, a sub-fuel injection unit disposed midway of a passage leading from a scavenging port to the intake passage including a throttle valve and a control means for controlling said sub-fuel injection unit in a manner that fuel supply to said air intake passage is performed only within a range wherein a speed and/or load representing parameter such as a throttle valve opening degree exceeds a predetermined threshold.

In particular, the sub-injection performed by the sub-fuel injection unit is performed with lower fuel pressure than the main injection performed through the main fuel injection unit.

According to another preferred embodiment of the present invention, the internal combustion engine, preferably 2-cycle gasoline engine, comprises a fuel injection system including a first pressure regulator provided midway of a fuel piping extending from the fuel tank through a fuel pump to said first pressure regulator downstream of said fuel pump for regulating the fuel pressure within said fuel supply branch, a second pressure regulator provided downstream of said first pressure regulator for regulating the fuel pressure within said section of the fuel supply branch down to a pressure level lower than that obtainable through said first pressure regulator, a main fuel injection unit connected to said fuel supply branch between said fuel pump and said first pressure regulator for supplying fuel directly to the engine combustion chamber and a sub-fuel injection unit connected to said fuel supply branch between said both pressure regulators for supplying fuel to the air intake passage of the engine.

Further features, advantages and properties of the present invention will become more apparent from a detailed description of advantageous embodiments thereof as follows, wherein:
Figure 1 is a construction illustration schematically showing a 2-cycle engine according to the present invention;
Figure 2 is a vertical cross-sectional view of Figure 1;
Figure 3 is a cross-sectional view along the line III-III of Figure 2;
Figure 4 is a plan view schematically showing the air intake manifold of the engine;
Figure 5 is a vertical cross-sectional view showing a main fuel injection unit of the engine according to the present invention;
Figure 6 is an enlarged cross-sectional view of the injection valve near the lower end thereof;
Figure 7 is a cross-sectional view along the line VII-VII of Figure 5;
Figure 8 is a diagram showing a mode of fuel injection timing;
Figure 9 is a time chart showing a mode of fuel injection timing;
Figure 10 is a graph showing the relationship between the engine speed and a throttle valve opening;
Figure 11 is a graph showing the relationship between the throttle valve opening and the fuel supply amount per cycle with the engine speed fixed;
Figures 12 and 13 are illustrations of intake manifolds schematically showing two other embodiments of the present invention;
Figure 14 is a graph corresponding to Figure 11 for describing another control method for the sub-fuel injection unit according to the present invention;
Figure 15 is a construction illustration similar to Figure 1, schematically showing the fuel injection system according to another embodiment of the present invention;
Figure 16 is a sectional view schematically showing principal portions of the injection system according to Figure 15;
Figure 17 is a construction illustration similar to that shown in Figure 15, schematically showing still another embodiment of the fuel injection system according to the present invention; and
Figure 18 is a sectional view schematically showing principal portions of the embodiment according to Figure 17.

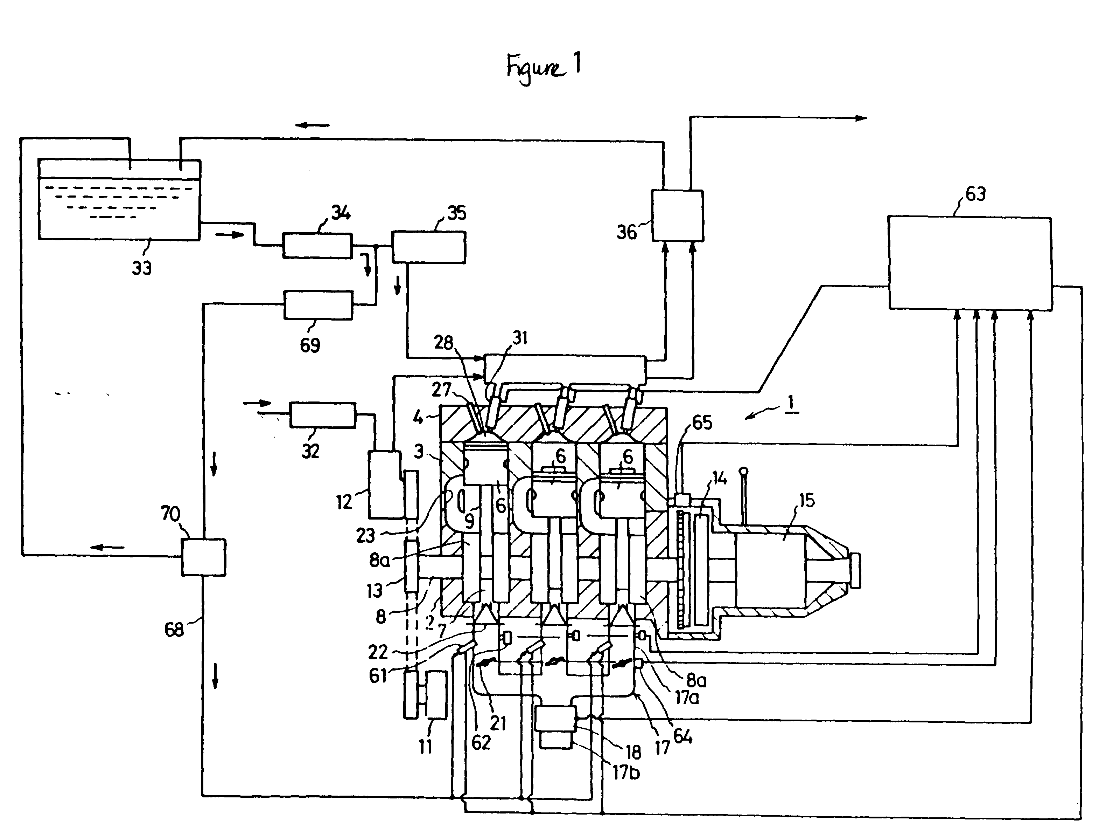

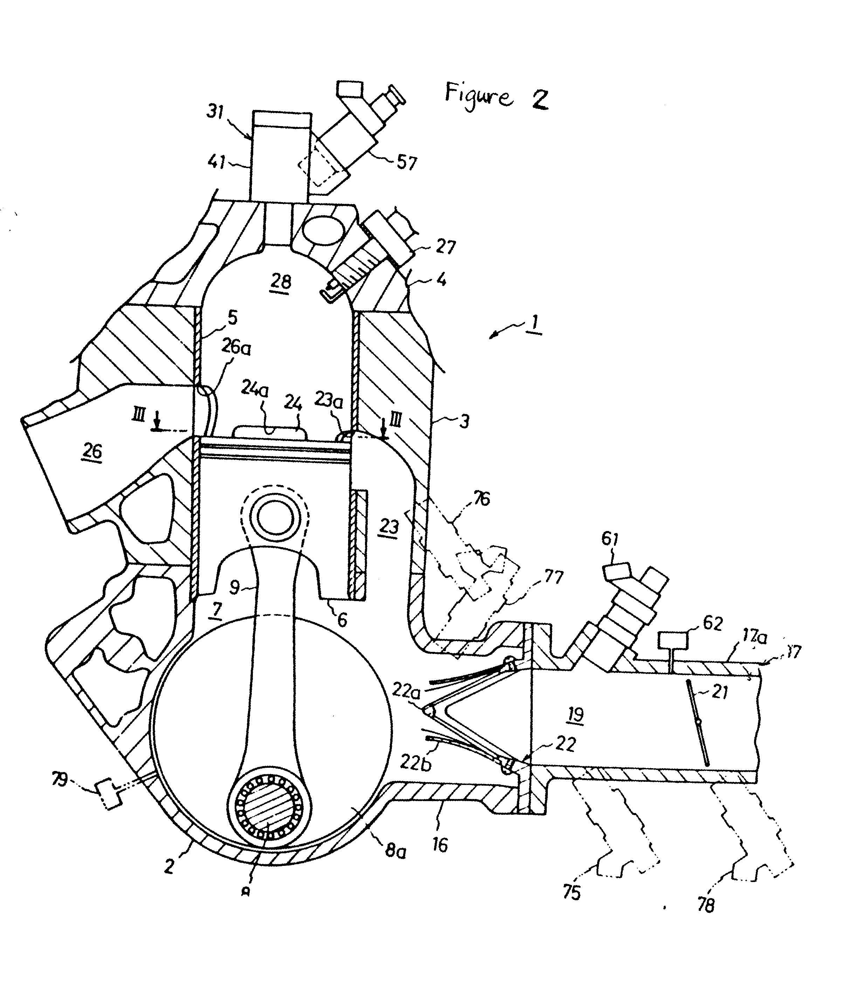

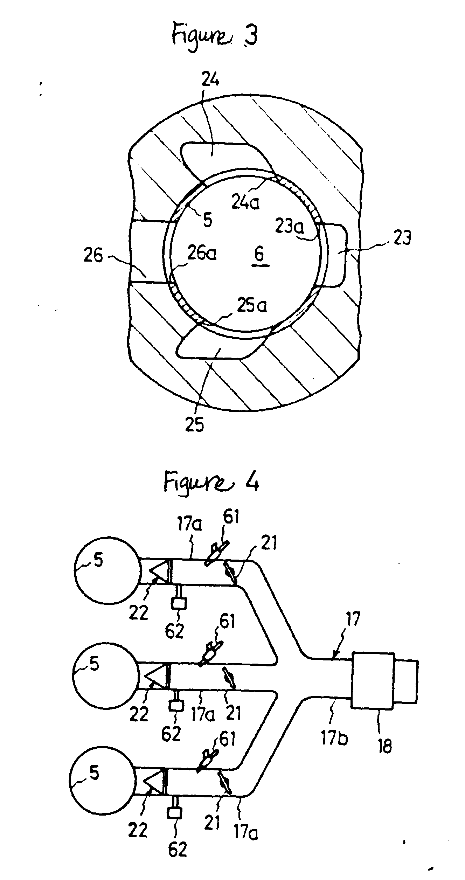

Now an embodiment of the present invention is described in detail referring to the attached drawings. Figure 1 is a construction diagram schematically showing a 2-cycle engine according to this invention, Figure 2 is a vertical cross-sectional view showing the same, and Figure 3 is a cross-sectional view along the line III-III of Figure 2. The reference number 1 in these drawings generally denotes a 2-cycle engine comprising a crankcase 2, a cylinder block 3 mounted above the crankcase 2 and a cylinder head 4 disposed over this cylinder block 3 to cover it. The cylinder block 3 has three cylinders 5 each bored for slidably holding a piston 6. Under each piston 6 is fomed a crank chamber 7 by the crankcase 2. The reference number 8 denotes a crankshaft connected to the piston 6 through the respective connecting rod 9, which has balance weights 8a formed integrally and is journaled rotatably and hermetically by the crankcase 2 so that the weight 8a may face the crank chamber 7. On one end of this crankshaft 8 is mounted a pulley 13 for driving the alternator 11 and the air compressor 12, and to the other end is is connected the transmission 15 through a clutch 14. Bearings for the crankshaft 8 or for connections of the crankshaft 8 with the connecting rods 9 are lubricated by supplying these lubricating points with lubricating oil by a lubricating oil pump (not shown) in this embodiment, but the lubricating oil may be supplied into the air intake passage upstream of the reed valves to be described later.

The reference number 16 denotes cylindrical passage portions projecting or tube portions formed integrally with the crankcase 2 for communicating the crank chamber 7 with the exterior, and the reference number 17 denotes an intake manifold connected to the upstream side of this tube portion 16. As shown in Figure 4, the intake manifold 17 is formed three-forked with branch portions 17a and a gathering portion 17b which is connected to an air cleaner (not shown) through an intake flow meter 18. The reference number 19 denotes an intake passage formed by the intake manifold 17 and the projecting tube portions 16 for taking fresh air into the crank chamber 7.

The reference number 21 denotes a throttle valve which is installed within each of the branch portions 17a of the intake manifold 17 and is operated by the driver through an operating means (not shown). The reference number 22 denotes a reed valve which is installed within each tube or passage portion 16 and comprises a valve frame 22a fastened between the passage portion 16 and the intake manifold 17, and two valve reeds 22b each fastened on this valve frame 22a at their upstream ends for opening and closing the valve ports of the valve frame 22a through their elastic deformation.

The reference numbers 23, 24 and 25 denote scavenging passages provided through the cylinder block 3 for communicating the crank chamber 7 with the cylinder 5 through the scavenging ports 23a, 24a and 25a, respectively, and the reference number 26 denotes an exhaust passage for discharging the exhaust gas within the cylinder through the exhaust port 26a. The scavenging passage 23 is disposed on both sides of the passage 23.

The reference number 27 denotes an ignition plug mounted on the cylinder head 4 through screw thread so as to face into the combustion chamber 28, and the reference number 31 denotes a main fuel injection unit similarly mounted on the cylinder head 4 through a fastening member so as to face into the combustion chamber 28. This main fuel injection unit 31 is supplied with air compressed by the air compressor 12 after passing through an air filter 32 and fuel stored in the fuel tank 33, fed to the fuel pump 35 through the fuel filter 34 and pressurized by the pump 35, mixes the above-mentioned air and fuel beforehand, and injects the mixture to supply the engine with fuel throughout entire engine operating domain. The air unused in injection is discharged into the atmosphere through a discharge pipe after being depressurized through the pressure regulator 36 and, on the other hand, the fuel unused in injection is returned to the fuel tank 33 after being depressurized through the pressure regulator 36. This pressure regulator 36 keeps the compressed air pressure constant while keeping the fuel pressure higher than the compressed air pressure by a definite amount by relieving compressed air and pressurized fuel as mentioned above.

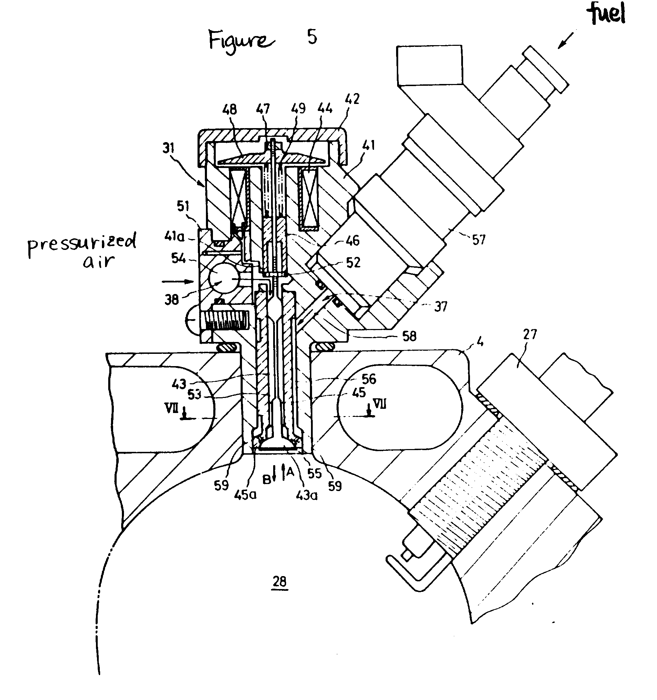

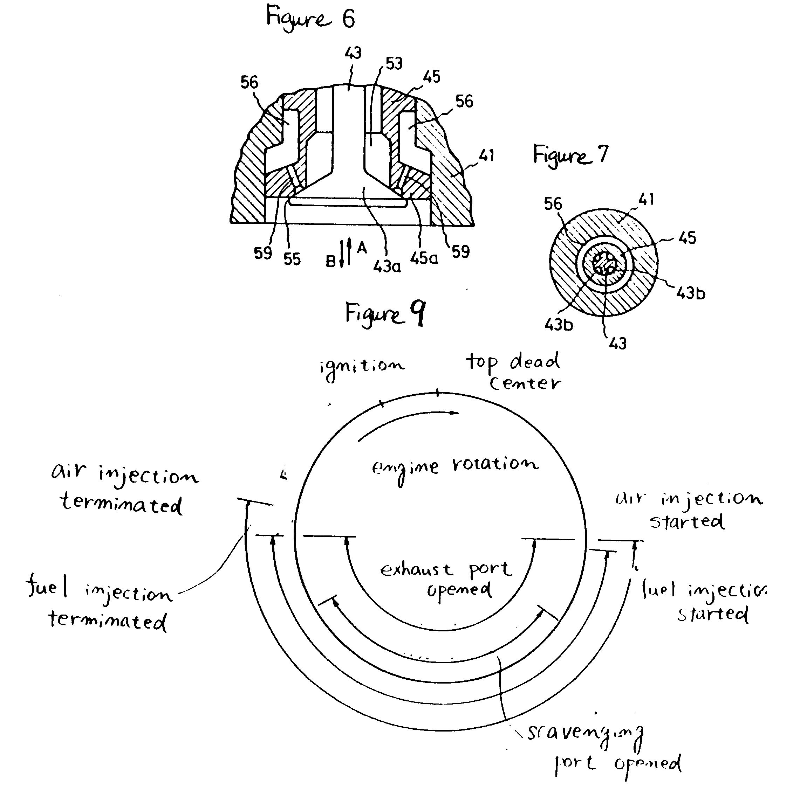

As shown in Figures 5 through 7, the main fuel injection unit 31 is provided with a fuel injection subsystem 37 for injecting fuel and an air injecting subsystem 38 for injecting air independently of each other. The housing 41 of the main fuel injection unit 31 is covered by a detachable cap 42 and has an electromagnetic coil 44 for driving the injection valve 43 mounted within. The injection valve 43 has a generally semi-spherical valve portion 43a at its lower end, and is held axially slidably by a support member 45 fixed within the lower (valve side) half of the housing 41, while being kept urged in the direction A for closing the valve by a compression spring 49 mounted between a retainer 46 fixed within the upper (opposite to valve side) half of the housing 41 and an armature 48 fixed by a nut 47.

The lift amount of this injection valve 43 is set by turning the nut 47 to transfer the armature 48 and, thus, adjusting the distance between the armature 48 and the electromagnetic coil 44 while assembling. The initial load of the compression spring 49, that is, the valve opening force of the injection valve 43, is determined, while assembling, with the cover 51 removed, by turning the adjusting member 52 fitted on the injection valve 43 with a tool from outside to adjust the distance between the armature 48 and the retainer 46, and then fixing on the retainer 46 by caulking the notched portion 42a of the housing 41 after adjustment. This initial load of the compression spring 49 may be adjusted by employing an externally threaded retainer 46 and turning the retainer 46 itself, while omitting the adjusting member 52. With these adjustments, the injection valve 43 can open and close exactly, and the contact between the valve portion 43a and the valve seat 45a can be fixed at a predetermined relationship.

Between the support member 45 and the injection valve 43 is formed an air passage 53 into which is continually supplied compressed air through an air supply port 54 provided through the cover 51. Since the injection valve 43 has a valve portion 43a and communicating holes 43b, the compressed air from the air passage 53 flows through these communicating holes 43b toward the valve portion 43a, and is supplied into the combustion chamber 28 through the air outlet 55 formed between the valve portion 43a and the valve seat 45a of the support member 45 when the valve portion 43a opens.

Between the support member 45 and the housing 41 is formed a fuel passage 56 into which is supplied fuel through a fuel passage 58 from a known type of fuel injection unit 57. The fuel supplied into the fuel passage 56 jets out of the fuel nozzle 59 formed through the valve seat 45a toward the valve portion 43a of the injection valve 43 and is supplied into the combustion chamber 28. The fuel nozzle 59 is not necessarily to be directed toward the air passage 53, but may be constructed so that the fuel may be directly supplied into the combustion chamber 28.

The reference number 61 denotes an auxiliary or sub-fuel injection unit disposed midway of a passage leading from a scavenging port 23a, 24a or 25a to be opened and closed through a piston 6 to the intake passage 19 incorporated with a throttle valve 21. In this first embodiment, this sub-fuel injection unit 61 is disposed at a portion of the intake passage 19 formed by the branch portion 17a of the intake manifold 17 between the throttle valve 21 and the reed valve 22. The reference number 62 denotes a pressure sensor disposed between the throttle valve 21 and the auxiliary fuel injection unit 61 for keeping constant the differential pressure in the intake passage 19 from the sub-fuel injecting unit 61 to the passage portion 16. The reference number 68 denotes an sub-fuel passage through which the sub-fuel injection unit 61 is supplied with fuel pressurized by an auxiliary fuel pump 69 and having a pressure regulator 70 disposed midway. This pressure regulator 70 keeps the fuel pressure within the tubing constant as compared to the atmospheric pressure by returning part of fuel to the fuel tank 33 when the fuel pressure within the tubing exceeds a predetermined limit.

The reference number 63 denotes a control unit as a control means for controlling the main fuel injection unit 31 and the sub-fuel injection unit 61. This control unit 63 controls the main fuel injection unit 31 according to the intake flow signal outputted by an intake flow meter 18, the throttle valve opening signal outputted by a throttle valve opening detector 64 which detects the opening of the throttle valve 21 by detecting the rotational position of its valve shaft, the crank angle signal and the engine speed signal outputted by the crank angle detector 65 and an intake passage pressure signal outputted by the pressure sensor 62, while controlling the sub-fuel injection unit 61 so that it may supply fuel into the intake passage 19 only within a domain wherein the opening of throttle valve 21 is in excess of a predetermined limit.

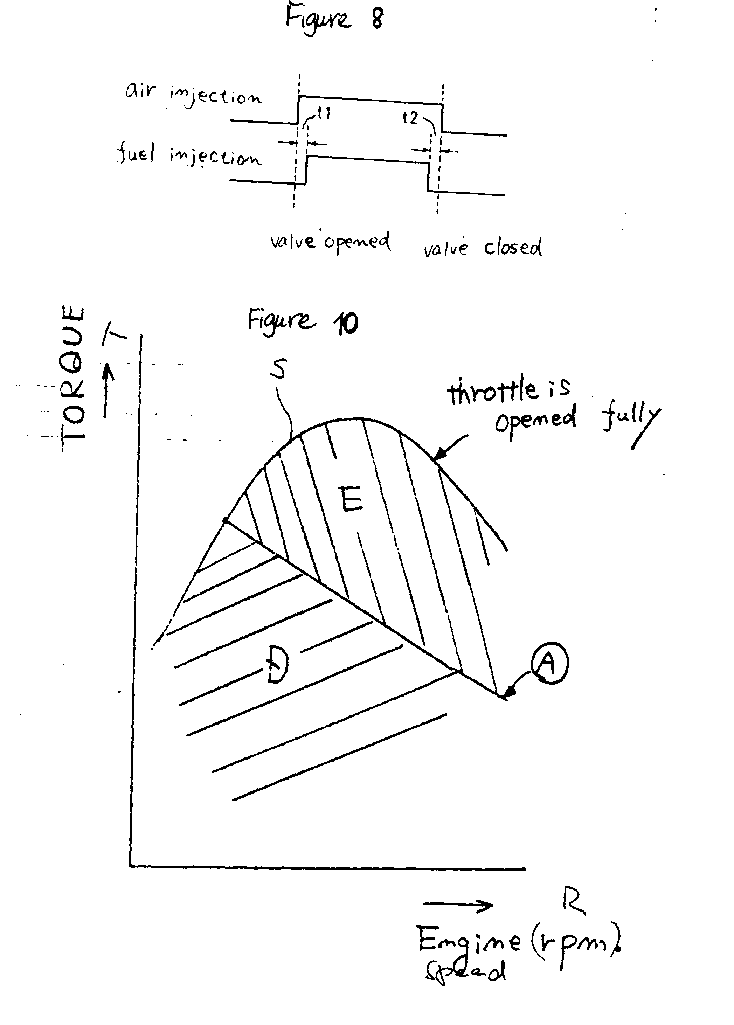

Now the control of the main fuel injection unit 31 is described first. Figure 8 is a diagram showing the fuel injection timing and Figure 9 is a time chart showing the fuel injection timing. In Figure 8, "air injection starts" shows the timing when the injection valve 43 is opening and air injection through the air outlet 55 starts, and "air injection finished" shows the timing when the injection valve 43 is closed and the air injection through the air outlet 55 is finished while "fuel injection starts" and "fuel injection finished" show timing of fuel injection by the fuel injection unit 57.

In Figure 9, "air injection" and "fuel injection" show the open-close timing of the injection valve 43 and the injection timing of the fuel injection unit 57, respectively. That is, at the time when the exhaust port 26a provided through the engine cylinder begins to be opened, the electromagnetic coil 44 is energized to transfer the injection valve 43 in the direction B to open it against the compression spring 49 and, thus, the compressed air supplied into the housing 41 is injected through the air passage 53 and through the air outlet 55 between the valve portion 43a of the injection valve 43 and the valve seat 45a of the support member 45 and then, after a predetermined time lag t1, the fuel is injected by the fuel injection unit 57, thus, fuel injection from the injection valve 43 into the combustion chamber is started through the fuel passage 56 and the fuel nozzle 59. Since compressed air has already been supplied at a definite flow speed through the air passage 53 when the fuel begins to be injected, fuel atomization can be carried out appropriately.

At the moment the exhaust port 26a is closed, the fuel injection unit 57 stops injecting fuel and fuel injection through the injection valve 43 is finished, and then, after a defininte time lag t2, the electromagnetic coil 44 is de-energized, the injection valve 43 is transferred in the direction A by the compression spring 49 in order to close the injection valve 43 bringing the valve portion 43a of the injection valve 43 into contact with the valve seat 45a of the support member 45 and, thus, to stop injecting pressurized air. Also, fuel injection is started just after the exhaust port is opened and after compressed air is injected, and is finished before compressed air injection is finished. In addition, since air injection is started after the exhaust port 26 has been opened and the pressure within the combustion chamber 28 has begun to fall, back flow of the combustion gas into the fuel injection unit is prevented by injection of fuel and compressed air into the combustion chamber 28, while the pressure of air and fuel to be injected into the combustion chamber need not be heightened immoderately. Even though not shown in the drawings, another advantageous control could be obtained starting and terminating fuel and pressurized air injection simultaneously, i.e. regulating fuel injection timing to become t1=t2=0.

Next is described the control of the sub-fuel injection unit 61. Figure 10 is a graph showing the relationship between the engine speed R and the engine torque which corresponds to the intake air amount and the engine load (or throttle opening). The domain surrounded by curve S which represents the maximum load condition with the throttle valve being fully opened reflects the engine operating domain, within whose portion D lower than the boundary line A fuel is supplied only by the main fuel injection unit 31 and within whose portion E higher than the boundary line A fuel is supplied by both the main fuel injection unit 31 and the sub-fuel injection unit 61. That means the straight line A inclined downwardly to the right reflects the condition at which the sub-fuel injection unit is started to operate. Within the domain E where the opening of the throttle valve 21 is in excess of a predetermined limit shown by the boundary line A, the fuel supply amount by the main fuel injection unit 31 remains constant (maximum discharge capacity of the main fuel injection unit), and a fuel supply by the sub-fuel injection unit 61 is added on it. Preferably, the torque is detected through a sensor monitoring the opening degree of the throttle valve to trigger the sub-fuel injection unit with increasing engine speed. Otherwise, another torque sensor could also be used. The boundary line A is formed right-lower as a straight line; however, also a curved line could be selected. Thus, the sub-injection fuel timing is triggered to start sub-injection at a lower torque (decreased throttle opening) when the engine speed increases. In order to detect whether the torque exceeds a predetermined level by detecting whether the throttle valve 21 is opened wider than the limit implied by the boundary line A, the valve opening may be directly detected by the above-mentioned valve opening detector 64, or may be indirectly detected by measuring the intake air amount passing through the intake air flow meter 19.

The extra fuel amount to be added by the auxiliary fuel injection unit 61 is determined on the basis of, e.g., Figure 11, which is a graph showing the relationship between the throttle valve opening S at an engine speed R fixed at a value X and the fuel supply amount per cycle Q, where the value Y is the torque value or throttle valve opening at which the auxiliary fuel injection unit 61 begins to supply fuel at the engine speed X (see Figure 10).

The fuel supply amount per cycle Q increases as the throttle valve opening S increases, and when the throttle valve opening reaches Y, the fuel supply amount Q reqches the maximum discharge capacity M of the main fuel injection unit 31. The sub-fuel injection unit 61 is controlled so that it may inject fuel only when the throttle valve 21 is opened wider than Y to increase total fuel supply amount Q. That is, in Figure 11, the domain F where the fuel supply amount Q is less than the maximum discharge capacity M of the main fuel injection unit 31 is covered by the main fuel injection unit 31, and the domain G where the fuel supply amount Q is more than the maximum discharge capacity M of the main fuel injection unit 31 is covered by the sub-fuel injection unit 61. The fuel supply by the sub-fuel injection unit 61 is increased as the throttle valve opening is increased. Here, since the main fuel injection unit continues to supply fuel throughout entire engine operating domain and the fuel supply by the auxiliary fuel injection unit 61 is added on that by the main fuel injection unit 31, fuel supply is smoothly changed over from supply by only the main fuel injection unit 31 to supply by both the main fuel injection unit 31 and the auxiliary fuel injection unit 61. In other words, the transient characteristics at the start of fuel supply by the sub-fuel injection unit 61 can be improved. Above-mentioned transient characteristics can be further improved by making the fuel supply amount change curvedly near the maximum discharge capacity M of the main fuel injection unit 31 as shown by a single-dotted chain line 71 or a double-dotted chain line 72 in Figure 11. Besides, the higher is the fuel supply pressure, the shorter is determined the injection duration of the sub-fuel injection unit 61, according to the differential pressure between the intake passage pressure given by the pressure sensor 62 and the fuel supply pressure.

On the 2-cycle engine thus constructed, vacuum pressure is produced in the crank chamber 6 when the piston 6 strokes upwardly, and this pressure change is transmitted to the reed valve 22 causing elastic deformation of valve reeds 22b and, thus, permitting air to flow into the crank chamber 7 through the intake passage 19. Then, when the piston 6 lowers, the air in the crank chamber 7 flows into the cylinder 5 through the scavenging passage 23 through 25. On the other hand, since the main fuel injection unit 31 continues to supply fuel and compressed air into the vicinity of the ignition plug 27 while the combustion gas is exhausted through the upper portion of the combustion chamber 28, combustion can be stabilized.

When the engine speed is increased and, thus, the opening of the throttle valve 21 becomes wider than a predetermined limit, the sub-fuel injection unit 61 begins to supply the intake passage 19 with extra fuel, which flows into the cylinder 6 through the scavenging ports 23 through 25, and can make contact with the piston 6. As the result, since the piston 6 can be cooled by the fuel contained in the mixture within the thermally harsh engine operating domain where the throttle valve 21 is opened in excess of a predetermined limit, the engine durability can be improved. Also, since the air intake amount becomes more and the remaining gas in the combustion chamber becomes less within a engine operating domain where the throttle valve 21 is opened in excess of a predetermined limit, even the fuel supplied through the scavenging ports can be securely ignited, and combustion stabilization brought about by this kind of main fuel injection unit 31 will never be spoiled.

Further, it is advantageous that, since the auxiliary fuel injection unit 61 is mounted on the intake manifold which is a relatively long member among engine components, its mounting position can be selected relatively freely.

Further, since the extra fuel is injected by the sub-fuel injection unit 61 into the intake passage portion upstream of the reed valve 22, the seating noise of the reed valve can be reduced by the buffering action of part of atomized fuel adhering to the valve frames 22a or valve reeds 22b. Also, since the fuel injection by the main fuel injection unit 31 is continued throughout entire engine operating domain without being interrupted a high load engine operation, there is no fear that the injection valve 43 should get thermally distorted or the injection valve portion near the valve portion 43a should get adhered with carbon.

Since, as described above, one of the main aspects of this invention is to combine the main fuel injection unit 31 and the sub-fuel injection unit 61 to stabilize combustion, while cooling the piston in the thermally harsh environment by the extra fuel supplied by the sub-fuel injection unit 61, the sub-fuel injection unit 61 may be installed, as shown by chain line figures 75 through 78 for the second through fifth embodiments in Figure 2, at the lower side of the branch portion 17a upstream of the throttle valve 21. When the sub-fuel injection unit 61 is installed at the position shown by the chain line figure 76, fuel can be supplied uniformly within the combustion chamber 28 since the scavenging port 23a is disposed opposite to the exhaust port 26a. When the sub-fuel injection unit 61 is installed at the chain line figure position 75 or 78, the pressure sensor 62 may be installed at the original position shown by solid lines, but when the sub-fuel injection unit 61 is installed at the position shown by the chain line figure 76 or 77, the pressure sensor 62 must be installed at the position 79 on the crankcase 2 as shown by chain lines.

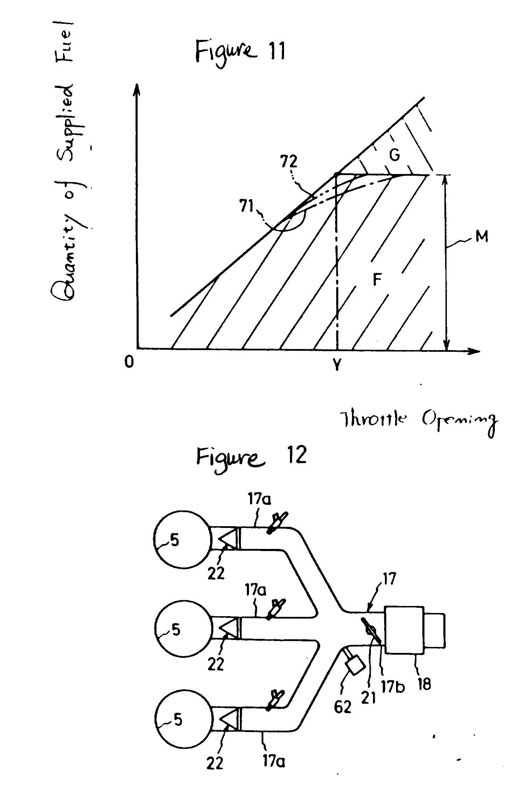

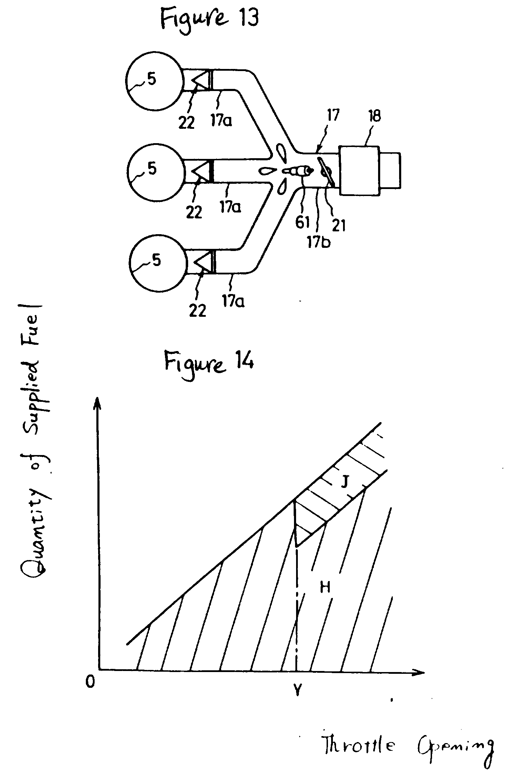

Figures 12 and 13 are schematic plan views of the intake manifold 17 showing two other embodiments of this invention. The sixth embodiment shown in Figure 12 has the sub-fuel injection unit 61 disposed on each of the branch portions 17a, a single throttle valve 21 disposed at the gathering portion 17b and the pressure snesor 62 disposed at the connection of the branch portions 17a and the gathering portion 17b. In this sixth embodiment, as in the first through fifth embodiments above, each sub-fuel injection unit 61 is controlled so that each may inject fuel discontinuously to the intake timing of the corresponding cylinder.

The seventh embodiment shown in Figure 13 has a single sub-fuel injection unit 61 and a single pressure sensor 62 both disposed at the connection of the branch portions 17a and the gathering portion 17b, and a single throttle valve 21 disposed at the side upstream of the sub-fuel injection unit. In this seventh embodiment, the sub-fuel injection unit 61 is controlled so that it may continuously inject fuel uniformly to supply each cylinder with fuel through a single sub-fuel injection unit 61. In both sixth and seventh embodiments, the sub-fuel injection unit 61 is excited within the domain D of Figure 10 as in the first through fifth embodiments.

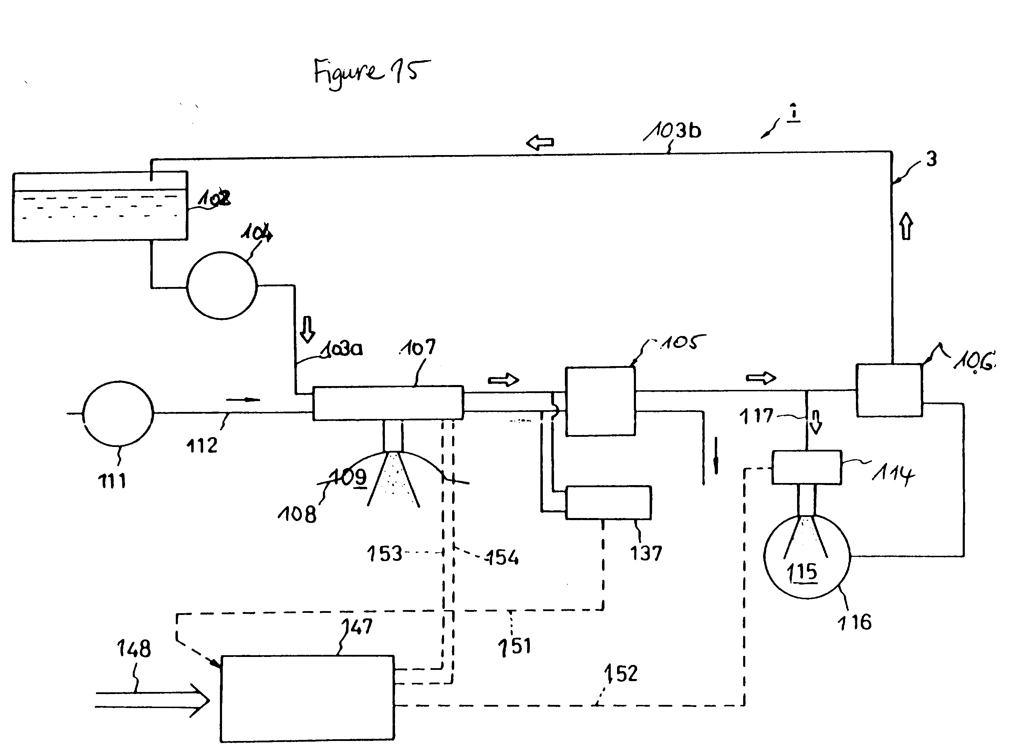

Figure 14 is the graph showing the relationship between the throttle valve opening S and the fuel supply amount per cycle Q as in Figure 11 to describe another control method for the sub-fuel injection unit 61. With this control method shown in Figure 14, the main fuel injection unit 31 is always used within its maximum discharge capacity and the fuel supply increment by the auxiliary fuel injection unit 61 is kept constant. In Figure 14, the lower domain H shows fuel supply by the main fuel injection unit 31 and the upper domain J shows fuel supply by the sub-fuel injection unit 61. The main fuel injection unit 31 is controlled so that its fuel supply amount may be increased as the throttle valve opening S is increased, be decreased by the fuel supply amount from the sub-fuel injection unit 61 when the throttle valve opening S reaches Y, and be again increased thereafter.

Although a conventional type of fuel injection unit is employed as the sub-fuel injection unit 61 in above embodiments, the sub-fuel injection unit for this invention is not limited to such a conventional one but may be one constructed in the similar way as the main fuel injection unit 31, which is effective for promoting fuel atomization. On the other hand, the present invention is not restricted to the provision of pressurized air supplying subsystem within the main fuel injection system 31 but the latter could also be made up of a sole fuel supply system if fuel is injected in a condition sufficiently sprayed.

Since the internal combustion engine, specifically the 2-cycle engine, according to this invention is provided, as described above, with a main fuel injection unit for supplying fuel throughout entire operating domain of the engine having a fuel passage and air passage and facing into each combustion chamber, a sub-fuel injection unit disposed preferably midway of a passage leading from a scavenging port to be opened and closed by a piston to the intake passage incorporated with a throttle valve and a control means for controlling this sub-fuel injection unit so that it may supply fuel to the above passage only within a domain wherein the opening of the throttle valve is in excess of a predetermined limit, it is possible to allow an air/fuel mixture flow into the cylinder through a scavenging port in the hight performance state of the engine which leads to the throttle valve being opened wider than a predetermined limit.

Accordingly, since the fuel in the mixture will come into contact with the piston and can cool the piston, it is possible to improve the engine durability. Further, since the air intake is more in amount and remaining gas in the cylinder is less in the state of the throttle valve opened wider than a predetermined limit, even the fuel supplied through the scavenging port can be smoothly combusted, and combustion stabilization brought about by this kind of main fuel injection unit which injects both fuel and air will never be spoiled. Also, since the fuel supply by the main fuel injection unit is continued throughout entire engine operating domain, the transient characteristics of the auxiliary fuel injection unit can be improved, and there is no fear that the main fuel injection unit should get thermally distorted or the main fuel injection unit should get adhered with carbon.

In some cases, however, the internal combustion engine and associated control methods as indicated above, should be further improved as under specific circumstances difficulties arise in injecting sufficient amounts of fuel through the main and the sub-fuel injection units 31,61 when the engine is operated in a range of maximum performance. In such cases, relying upon a mere timing control for main and sub-injection could induce difficulties as the injection period available during the phase the exhaust port is opened is relatively short and precise injection timing is difficult. Accordingly, an improved method and assembly for discharging an adequate and exact amount of fuel under all running conditions is explained in the following, pointing to Figures 15 to 18.

Looking for strategies to discharge an appropriate amount of fuel at appropriate timing precisely and within the extremely short periods, leads to investigating the pressurization of the fuel injected through the main or sub-fuel injection units 31,61.

As indicated above (see Figure 1), two fuel pumps 35,69 form part of the fuel injection system adapted to provide for different fuel pressure for main fuel injection (higher pressure) and sub-fuel injection (lower pressure).

Another embodiment of the present invention as indicated hereinbelow aims to simplify the structure of the fuel injection system providing a need to use a plurality of fuel pumps.

According to the embodiment of the present invention as shown in Figures 15 to 18, the internal combustion engine including the fuel injection 100 system thereof comprises a single fuel pump 104 upstream of a fuel tank 102 and provides for a closed-loop piping circuit including a fuel supply branch 103a and a fuel return branch 103b with a first pressure regulator 105 (high pressure) and a second pressure regulator 106 (low pressure) arranged in series in the fuel supply branch 103a downstream of the fuel pump 104.

In Figure 15, an internal combustion engine control system 1 is shown comprising a fuel tank 102 containing gasoline fuel. A fuel piping 103 is connected to the fuel tank 102 forming a closed-loop circuit piping extending from the fuel tank 102 and returning to said fuel tank 102. That is, the fuel piping 103 is designed by connecting a fuel supply branch 103a for supplying fuel with a fuel recovery piping 103b for returning unused fuel to the fuel tank 102.

A fuel pump 104 is provided in the fuel supply branch 103a receiving fuel from the fuel tank 102, pressurizing said fuel and discharging same to the fuel consuming components of this system 100. In its most generalized aspects, the fuel delivery and return circuit comprises a first pressure regulator 105 provided downstream of the fuel pump 104 midway of the fuel supply branch 103a followed in series by another second pressure regulator 106 provided downstream of the first pressure regulator 105. In other words, the fuel pump 104, first pressure regulator 105 and second pressure regulator 106 are connected in series through the fuel supply branch 103a in this order from upstream to downstream. The first pressure regulator 105 regulates the fuel pressure within the portion of the fuel supply branch 103a upstream of the first pressure regulator 105 and downstream of the fuel pump 104. The first pressure regulator 104 acting as a high pressure regulator regulates fuel pressure to a value appropriate for injecting fuel into the combustion chamber 109 of the engine through a main injector 107, as described hereinafter, and the second pressure regulator 106, acting as a low pressure regulator, adjusts the fuel pressure upstream of the second pressure regulator 106 and downstream of the first pressure regulator 105 to a value lower than the fuel pressure as regulated by the first pressure regulator 105 but sufficiently high to enable to fuel injection into the air intake passage 115 of the engine through a sub-injector 114, as described hereinafter.

The main fuel injection unit 107 is mounted on the engine cylinder head 108 in such a manner as facing into the engine combustion chamber 109. Moreover, said main injector 107 is connected to an air supply piping 112 through which pressurized air discharged from an air compressor 111 is delivered to premix fuel and air and to inject and supply said mixture subsequently as a premix into the combustion chamber 109. Said main injector 107 is connected between the fuel pump 104 and the first pressure regulator 105 through the fuel supply branch 103a. The downstream end of the pressurized air delivery piping 102 is opened to the atmosphere 113 through the first pressure regulator 105.

Reference numeral 114 denotes an auxiliary or sub-fuel injection unit or sub-injector mounted on an intake pipe 116 of the engine forming the intake passage 115, said sub-injector 114 being opened into this intake passage 115. Said sub-fuel injection unit 114 comprises a known fuel injection valve and is connected between the first and second regulators 105 and 106 to the fuel supply supply branch 103a via a fuel introducing tube 117 in order to inject and supply fuel into the intake passage 115.

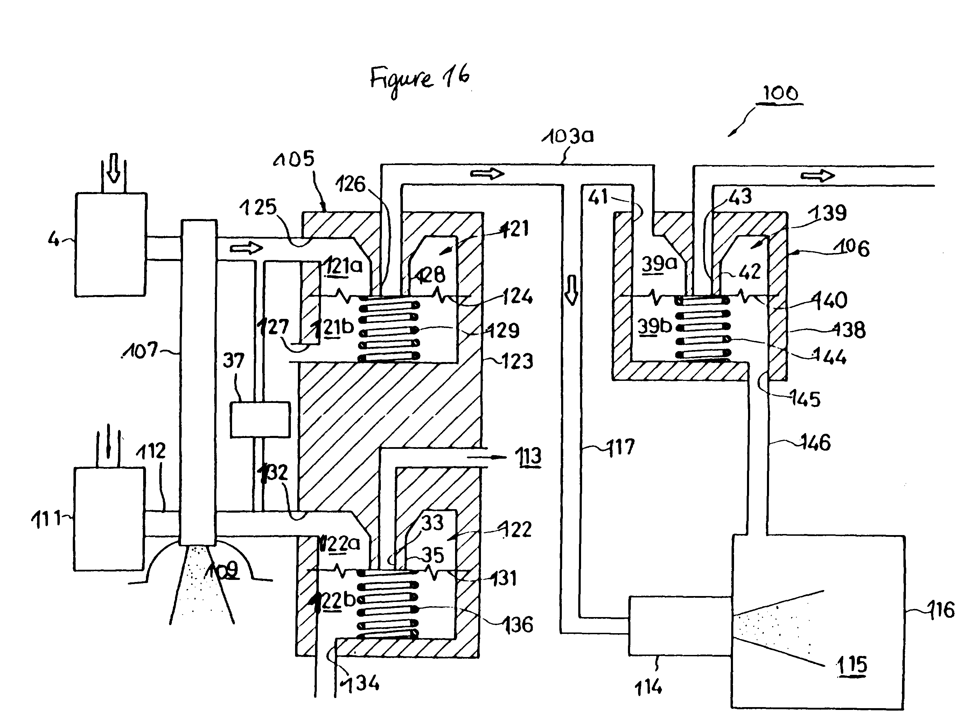

In Figure 16, the layout of the pressure regulators 105, 106 and the interconnections thereof in conjunction with the main fuel injection unit 107 and the sub-fuel injection unit 114 are shown. The first pressure regulator 105 has a body 123 comprising a first fuel regulating chamber 121 and an air regulating chamber 122. The first fuel regulating chamber 121 is partitioned by a diaphragm 124 into a high pressure chamber 121a, having a fuel inlet 125 and a fuel outlet 126 connected with the fuel supply branch 103a, and a low pressure chamber 121b communicated to the atmosphere 113 through a communicating port 127. The fuel outlet 126 is opened opposite to a center portion of the diaphragm 124 through a downwardly projecting cylinder portion 128 and said outlet 126 can be opened or closed by the diaphragm 124.

A compression spring 129 pressing the diaphragm 124 in the direction for closing the fuel outlet 126 is provided. Similarly, the air regulating chamber 122 is partitioned by a diaphragm 131 into a high pressure chamber 122a, having an air inlet 132 and an air outlet 133, and a low pressure chamber 123 communicated with the atmosphere 113 through a communicating port 134. The air outlet 133 is opened opposite to a center portion of the diaphragm 131 through a cylinder portion 135 and can be opened or closed by the diagragm 135. The reference numeral 136 denotes a compression spring for pressing the diaphragm 131 in the direction for closing the air outlet 133.

Said first pressure regulator 105 regulates the pressures of fuel and air by opening or closing the fuel outlet 126 and the air outlet 133 to keep these pressures constant. In this embodiment, the pressurized air pressure is kept near 5 kg/cm² and the fuel pressure is kept near 5.5 kg/cm², i.e. the fuel pressure is maintained under pressure higher than those of the pressurized air. A pressure sensor 137 is inserted in between the inlet sides of the first fuel regulating chamber 121 and the air regulating chamber 122 in order to detect the pressure difference between the fuel supply branch 103a and the air supply piping 112 upstream of the first pressure regulator inlets 125 and 132.

The second pressure regulator 106 is designed similarly to the first fuel regulating chamber 121 of the first pressure regulator 105. That is, a body 138 of the second pressure regulator 106 has a second fuel regulating chamber 139 formed therein and partitioned by a diaphragm 140 into a high pressure chamber 139a and a low pressure chamber 139b. The high pressure chamber 139a is communicated with the fuel return branch 103b through a fuel outlet 143, formed through the cylindrical portion 142 so as to be opened or closed by the diaphragm 140. On the other hand, said high pressure chamber 139a joins with the fuel supply branch 103a through its fuel inlet 141. A low pressure chamber 139b accomodating a compression spring 144 for pressing the diaphragm 140 against the fuel outlet 143 is communicated with the air intake passage 115 of the engine through a communicating port 145 and a communication piping 146. The assembly is adjusted to set the biasing force the compression spring 144 smaller than that of the compression spring 129. Accordingly, the second pressure regulator 106 is adjusted to keep constant the pressure difference between the fuel pressure and the fuel inlet side 141 and the intake pressure within the intake passage 115, while keeping the fuel pressure at the fuel inlet sidet 141 lower than that at the upstream side of the first pressure regulator 105. In this embodiment, the fuel pressure at the side of the fuel inlet 141 is set near 3 kg/cm².

A control unit 147 for controlling the main and the sub-fuel injection units 107 and 114 is also provided. This control unit 147 judges the engine operating conditions according to the engine information 148 corresponding to the intake flow rate outputted by an intake flow meter (not shown), engine speed, crank angle, etc., and a signal inputted from a pressure sensor 137 through a signal path 151, said signal representing the pressure difference between the fuel and the presurized air. The control unit 147 outputs signals through signal paths 152, 153 and 154 for controlling the fuel injecting time of the sub-fuel injection unit 114 (signal path 152) and for operating the main fuel injection unit 107.

In this embodiment, since the pressure difference between the intake pressure within the air intake passage 115 and the fuel pressure at the fuel inlet side 139 is kept constant by the communicating pipe 146 as mentioned above, a definite amount of fuel can be injected by injecting fuel from the sub-fuel injection unit 114 for a definite time.

Through the path 153 of the control unit 147, signals to operate a fuel valve for adjusting the fuel amount to be injected through the main fuel injection unit 107 are provided and through the signal path 154 signals are outputted to operate an air valve for adjusting the amount of air to be injected through the main fuel injection unit 107. The afore-mentioned fuel valve is controlled in a manner, that it may inject fuel for a time corresponding to the pressure difference detected by the pressure sensor 137, the output of which is fed to the control unit 147 through the signal path 151. Specifically, the injection time is controlled to be shorter when the pressure difference is large and to be longer when the pressure difference is small.

The operation of the afore-indicated fuel injection system is as follows:

The fuel is supplied from the fuel tank 102 to the fuel pump 104 which may, in turn, pressurize and discharge it into the fuel supply branch 103a. The fuel is supplied to the main fuel injection unit 105 with a constant pressure regulated to be higher than the pressure of the pressurized air and is injected into the combustion chamber 109. The fuel/air-pressure regulation is performed by the first pressure regulator 105. On the other hand, the fuel which is left unsupplied to the main fuel injection unit 107 is supplied to the sub-fuel injection unit 114 with a pressure regulated to be lower than that at the downstream side of the first pressure regulator 105. Said second, reduced pressure downstream of the first pressure regulator 105 is regulated by the second pressure regulator 106. The fuel supplied to the auxiliary or sub-fuel injection unit 114 is injected into the air intake passage 115 and the fuel left unsupplied to the sub-fuel injection unit 114 is returned to the fuel tank 102 through the fuel return branch 103b.

Accordingly, while fuel is supplied into the combustion chamber 109 through injection performed by the main fuel injection unit 107, additional fuel can be supplied into the air intake passage 115 through injection performed by the sub-fuel injection unit 114. Moreover, the internal combustion engine provided with a fuel injection system, according to this embodiment of the present invention, implies a simplified structure because both high pressure fuel to be supplied to the main fuel injection unit 107 and low pressure fuel to be supplied to the sub-fuel injection unit 114 can be delivered by a single fuel pump 104 and a simplified fuel piping 103 but, on the other hand, all the advantages already indicated with respect to the preceding embodiments of the present invention, for example, as shown in Figure 1, can be acquired.

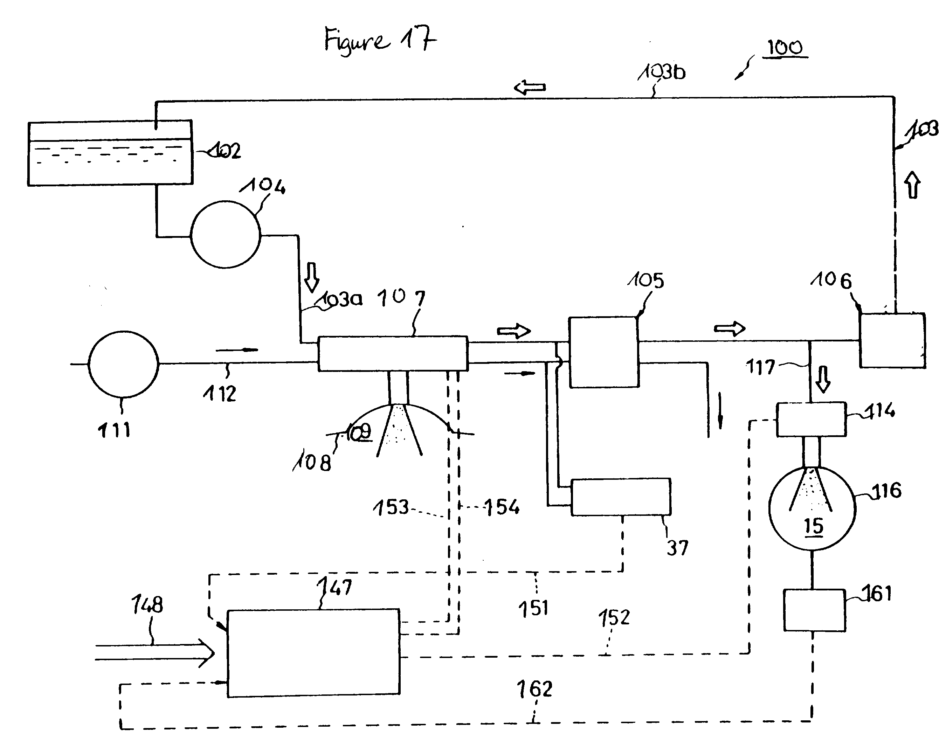

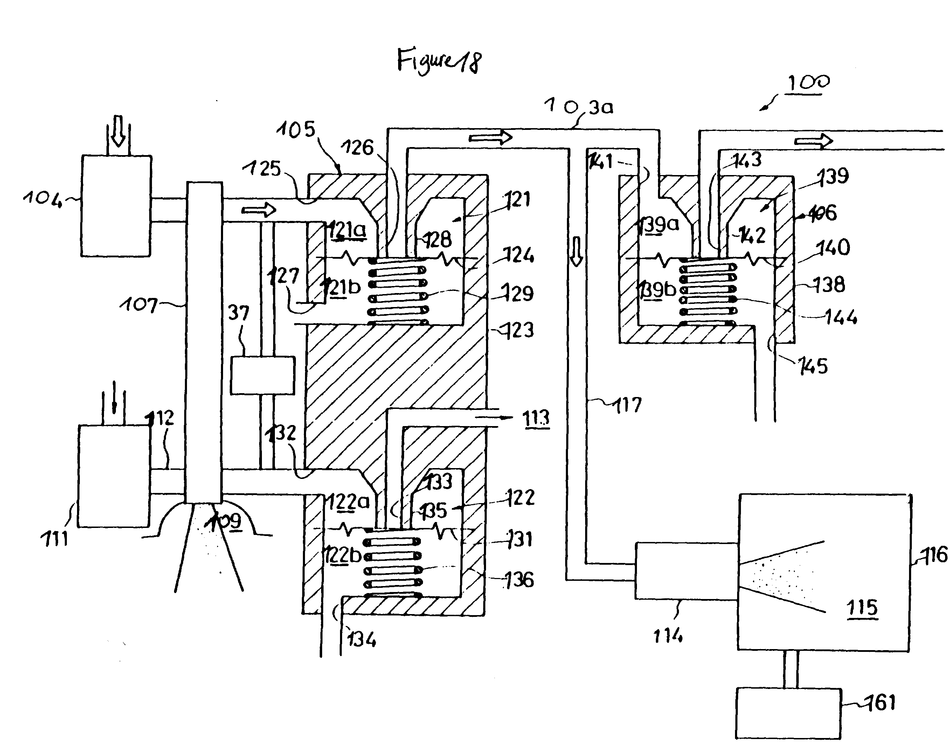

Figure 17 discloses yet another embodiment of the present invention similar to those shown in Figure 15 with the sectional view of the main components, similar to the illustration of Figure 16 shown in Figure 18.

In these drawings, the same reference numerals as in Figures 15 and 16 designate the same or equivalent members and, accordingly, the description thereof will not be repeated. In this further embodiment of the internal combustion engine equipped with an improved fuel supply system, since the communicating port 145 of the second pressure regulator 106 is opened to the atmosphere 113, the pressure difference between the atmospheric pressure and the fuel pressure at the fuel inlet side 139 is regulated to be constant. Said regulation is effected through the second pressure regulator 106. Therefore, a pressure sensor 161 is provided to detect the pressure within the air intake passage 115, and a signal corresponding to the pressure within the air intake passage 115 is inputted into the control unit 147 through a signal passage 162. The control unit 147 controls the main fuel injection unit 107 in the same manner as in the afore-indicated embodiment shown in Figure 15, but controls the sub-fuel injection unit 114 in a manner that the amount of fuel injection provided through said sub-fuel injection unit 114 can be kept constant by varying its fuel injection time according to the pressure within the air intake passage 115 detected by said pressure sensor 161.

In this embodiment, a simplified layout of this system is also achieved even though fuel is injected not only into the combustion chamber 109 but also into the air intake passage 115, feeding fuel to the main and sub-injectors 106, 114 by means of a single fuel pump 104.

Again, main and supplemental fuel injection is provided through the afore-indicated embodiments as shown in Figures 15 through 18. Although the timing of fuel injection through the main and auxiliary injectors 107,106 was not specifically outlined, also in said embodiments, the explanations given with respect to the first embodiment according to Figure 1, specifically Figure 9, apply.

Performing a pressure regulation as indicated above enables to inject precisely a correct amount of fuel through main and auxiliary injection even under high speed/high load operating conditions of the engine so that a smooth combustion and appropriate piston cooling can be provided.

The afore-mentioned embodiments enable different fuel injection pressure to be easily obtained with a single fuel pump and a simplified structure of the internal combustion control system.

## Claims

1. Internal combustion engine comprising a fuel injection system for supplying fuel to a combustion chamber (28) of the engine under the control of a control unit (63, 147), said fuel injection system comprising a main fuel injection unit (31, 107) supplying fuel into the combustion chamber and a sub-fuel injection unit (61, 114) supplying fuel to a passage communicating with the combustion chamber (28)
**characterized in that**
the main fuel injection unit (31, 107) is operated under all engine operating conditions supplying fuel in response to engine parameters sensed by the control unit whereas the sub-fuel injection unit (61, 114) for supplying additional quantities of fuel to said passage communicating with the combustion chamber (28) is operated only under high speed and/or high load engine operating conditions together with the main fuel injection unit (31, 107) in response to engine parameters sensed by the control unit while both the main fuel injection unit (31, 107) and the sub-fuel injection unit (61, 114) are controlled by a pressure regulator system wherein the injection pressure of the main fuel injection unit (31, 107) is controlled at a higher pressure level than the sub-fuel injection unit (61, 114).

2. Engine as claimed in Claim 1,
**characterized in that**
an air supplying system is provided for supplying air to each combustion chamber.

3. Engine as claimed in Claim 1,
**characterized in that**
the main fuel injection unit (31,107) comprises a fuel injection subsystem (37) and a pressurized air supply subsystem (38) adapted to improve atomization of fuel in a fuel/air-mixture, preferably injected into the combustion chamber (21) as a premix.

4. Engine as claimed in at least one of the preceding Claims 1 to 3,
**characterized in that**
said sub-fuel injection unit (61,114) is not operated during a low speed/low load operating condition of the engine including an idling condition.

5. Engine according to at least one of the preceding Claims 1 to 3,
**characterized in that**
the main fuel injection unit (31,107) is provided with a fuel injection subsystem (37) for injecting fuel and an air injecting subsystem (38) for injecting air independently of each other.

6. Engine as claimed in Claim 5,
**characterized in that**
the main fuel injection unit (31) is provided with a fuel passage (58) for supplying fuel and an air passage (53) for supplying compressed air and an injection valve (43) for opening and closing these passages (56,53) enabling an air/fuel-mixture to be injected directly into the combustion chamber (28) of the engine with the fuel being atomized therein.

7. Engine as claimed in at least one of the preceding Claims 1 to 6,
**characterized in that**
the sub-fuel injection unit (61) supplies fuel to a passage leading to the combustion chamber (28) only during an operating range of the engine wherein the opening of a throttle valve (21) exceeds a predetermined value.

8. Engine as claimed in at least one of the preceding Claims 1 to 7,
**characterized in that**
the engine is a gasoline engine.

9. Engine as claimed in Claim 8,
**characterized in that**
the engine is a three cylinder engine.

10. Engine as claimed in at least one of the preceding Claims 1 to 9,
**characterized in that**
the sub-fuel injection unit (61) is disposed midway of a passage leading from a scavenging port (23a) which is controlled by the reciprocating movement of a piston (6) to an air intake passage (19) accomodating a throttle valve (21) therein.

11. Engine as claimed in at least on of the preceding Claims 1 to 10,
**characterized in that**
the sub-fuel injection unit (61) is associated to the air intake passage (19) of the engine formed by an intake manifold (17) and tube-like passage portions (16) for taking fresh air into a crank chamber (7) of the engine.

12. Engine as claimed in Claim 11,
**characterized in that**
the sub-fuel injection unit (61) is disposed at the intake manifold (17) upstream or downstream of the throttle valve (21) accomodated therein.

13. Engine as claimed in Claim 11,
**characterized in that**
the sub-fuel injection unit (61) is disposed downstream of the throttle valve (21) upstream of a reed valve (22).

14. Engine as claimed in Claim 11,
**characterized in that**
the sub-fuel injection unit (61) is disposed at the crankcase (2) of the engine at a portion (16) defining part of the air intake passage (19) and is disposed downstream of a reed valve (22) to open into the air intake portion of the crank chamber (7).

15. Engine as claimed in Claim 11,
**characterized in that**
the sub-fuel injection unit (61) is disposed at the cylinder block (3) of the engine opening into a scavenging passage (23), the scavenging port (23a) of which is located opposite to an exhaust port (261) of the respective cylinder (5).

16. Engine as claimed in at least one of the preceding Claims 1 to 15,
**characterized in that**
the crank chamber (7) is communicated with each of the cylinders (5) by means of a plurality of scavenging passages (23,24,25) opening into the cylinder (5) through scavenging ports (23a,24a,25a) respectively.

17. Engine as claimed in Claim 16,
**characterized in that**
each cylinder (5) is communicated with the crank chamber (7) by three scavenging passages (23,24,25), one of which (23) opens into the cylinder (5) opposite to the exhaust passage (26) while the other scavenging passages (24,25) are disposed on both sides of said oppositely disposed scavenging passage (23).

18. Engine as claimed in at least one of the preceding Claims 1 to 17,
**characterized in that**
the crankcase (2) is integrally formed with sidewardly projecting tube portions (16) one for each cylinder (5), communicating the crank chamber (7) with the exterior with each of said tube portions (16) defining the downstream section of the air intake passage (19) being connected to the air intake manifold (17).

19. Engine as claimed in Claim 18,
**characterized in that**
the air intake manifold (17) is formed multi-forked with branch portions (17a), the number of which corresponds to the number of the cylinders of the engine, and a gathering portion (17b), connected via an air intake flow meter (18) to an air cleaner.

20. Engine as claimed in Claim 19,
**characterized in that**
a throttle valve (21) is disposed in each of the branch portions (17a) of the air intake manifold (17).

21. Engine as claimed at least one of the preceding Claims 18 to 20,
**characterized in that**
the sub-fuel injection unit (61) is installed at the downstream side of each branch portion (17a) of the air intake manifold (17) downstream of the throttle valve (21) as is disposed in each of the branch portions (17a) or at the cylinder block skirt section through the wall of the scavenging passage (23) leading to the scavenging port (23a) opposite to the exhaust port (26a) of the exhaust passage (26), or at the projecting tube portion (16) of the crankcase (2) defining part of the air intake passage (19) to face the crank chamber (7) or at a portion of the branch portion (17a) upstream of the throttle valve (21).

22. Engine as claimed in at least one of the preceding Claims 18 to 21,
**characterized in that**
the air intake manifold (17) is formed multi-forked with branch portions (17a) and a gathering portion (17b) and a throttle valve (21) is disposed in each of the branch portions (17a) and a sub-fuel injection unit (61) is installed to each of the branch portions (17a) downstream of each of the throttle valves (21) together with a pressure sensor (62) located downstream of the sub-fuel injection unit (61) and upstream of a reed valve (22), respectively, said reed valve (22) communicating the respective branch portions (17a) to the crankcase (2) of the engine.

23. Engine as claimed in at least one of the preceding Claims 18 and 19,
**characterized in that**
each branch portion (17a) of the air intake manifold (17) comprises an individual sub-fuel injection unit (61) ahead of a reed valve (22) whereas a common throttle valve is disposed within the gathering portion (17b) of the air intake manifold (17) downstream of a airflow meter (18) with a single pressure sensor (62) being disposed at an intermediate portion downstream of the throttle valve (21) joining the gathering portion (17b) with the separate branch portions (17a) of the air intake manifold (17).

24. Engine as claimed in Claim 23,
**characterized in that**
a single sub-fuel injection unit (61) is disposed at an intermediate portion joining the gathering portion (17b) of the air intake manifold (17) with the individual branch portions (17a) thereof, said single sub-fuel injection unit (61) being adapted to inject fuel into each of the separate branch portions (17a) of the air intake manifold (17) or said single sub-fuel injection unit (61) is disposed upstream of the throttle valve (21).

25. Engine as claimed in Claim 24,
**characterized in that**
the throttle valve (21) is disposed in the gathering portion (17b) of the air intake manifold (17) between an intake airflow meter (18) and said single sub-fuel injection unit (61).

26. Engine as claimed in at least one of the preceding Claims 1 to 25,
**characterized in that**
a reed valve (22) is disposed at the end of each of the branch portions (17a), respectively, each of said reed valves (22) comprising a valve frame (22a) fastened in between the upstream end of the respective tube portion (16) of the crankcase (2) and the downstream end of the respective branch portion (17a) of the air intake manifold (17).

27. Engine as claimed in Claim 26,
**characterized in that**
each reed valve (22) comprises two valve reeds (22b) fastened on the valve frame (22a) for opening and closing the valve ports of the reed valve (22) due to their resilient deformation.

28. Engine as claimed in at least one of the preceding Claims 1 to 27,
**characterized in that**
the sub-fuel injection unit (61) is designed similar to the main fuel injection unit (31) including a pressurized air supply system (38) adapted to improve the atomization of fuel injected through the sub-fuel injection unit (61) into the air intake passage (19).

29. Engine as claimed in at least one of the preceding Claims 1 to 28,
**characterized in that**
the main fuel injection unit (31) is disposed centrally at the top of the cylinder head including the injection valve (43), the valve head (43a) facing the combustion chamber (28) whereas an ignition plug is mounted on the cylinder head (4) sidewards of the main fuel injection unit (31).

30. Engine as claimed in Claim 29,
**characterized in that**
the combustion chamber (28) has a dome-shape with the main fuel injection unit (31) injecting an air/fuel mist substantially at the top of the combustion chamber (28).

31. Engine as claimed in at least one of the preceding Claims 1 to 30,
**characterized in that**
the main fuel injection unit (31) integrally combines the fuel injection subsystem (37) for injecting fuel and the pressurized air injection subsystem (38), both systems being controlled independently, with a fuel passage (58) of the fuel supply subsystem (37) opening into another fuel passage (56) of a injection valve support member (45) to jet out of a fuel nozzle (59) formed through a valve seat (45a) of the injection valve (43) toward the valve member (43a) of the injection valve (43) injecting fuel into an air outlet of a pressurized air passage formed between the valve member (43a) and the valve seat (45a) of the valve support member (45) when the valve member (43a) opens to inject an air/fuel mixture containing atomized fuel droplets into the combustion chamber (28).

32. Engine as claimed in at least one of the preceding Claims 1 to 31,
**characterized in that**
a control system is provided including said control unit (63) as well as a first pressure regulator (36) disposed downstream of the main fuel injection unit (31) adapted to return unused fuel to a fuel tank (33) and to discharge unused pressurized air to the atmosphere.

33. Engine as claimed in Claim 32,
**characterized in that**
said first pressure regulator (36) is adapted to keep the compressed air pressure for main fuel injection constant while keeping the fuel pressure by a definite amount higher than the pressure of the compressed air.

34. Engine as claimed in Claim 33,
**characterized in that**
said main fuel injection unit (31) is supplied with compressed air by means of an air compressor (12) driven by the crank shaft (8) via a V-belt.

35. Engine as claimed in Claim 34,
**characterized in that**
said main fuel injection unit (31) is supplied with pressurized fuel by a primary fuel pump (35) disposed in between a fuel filter (34) which, in turn, takes fuel from the fuel tank (33), and the main fuel injection unit (31).

36. Engine as claimed in at least one of the preceding Claims 1 to 35,
**characterized in that**
a secondary fuel pump (69) is connected in between the air filter (32) and the primary fuel pump (35) adapted to supply pressurized fuel to the sub-fuel injection unit (61).

37. Engine as claimed in Claim 36,
**characterized in that**
a second pressure regulator (70) is disposed midway between the secondary fuel pump (69) and the sub-fuel injection unit (31), said pressure regulator (70) maintains the fuel pressure within the tubing constant with respect to the atmospheric pressure returning part of the fuel to the fuel tank (33) when the fuel pressure within the tubing exceeds a predetermined value.

38. Engine as claimed in at least one of the preceding Claims 1 to 37,
**characterized in that**
the control unit (63) receives signals from at least one pressure sensor (62) detecting pressure in the air intake passage (19), from a throttle valve opening detector (64), from a crank angle detector (65) and from an air intake flow meter (18) in order to control the main fuel injection unit (31) and the sub-fuel injection unit (61) in a manner that the sub-fuel injection unit (61) is activated to supply fuel into the air intake passage (19) only within a range wherein the opening of the throttle valve (21) exceeds a predetermined level.

39. Engine as claimed in Claim 38,
**characterized in that**
the pressure sensor (62) is disposed downstream of the throttle valve (21) upstream or downstream of the sub-fuel injection unit (61) in order to keep constant the differential pressure in the air intake passage (19) from the sub-fuel injection unit (61) to the tube portion (16) of the crankcase (2).

40. Engine as claimed in Claim 39,
**characterized in that**
the sub-fuel injection unit (61) is installed at the tube portion (16) of the crankcase (2) or the wall of the scavenging passage (23) of the cylinder block skirt section and the pressure sensor (79) is disposed substantially diametrically with respect to the axis of the crank shaft (8) at the lower portion of the crank case (2).

41. Engine as claimed in at least one of the preceding Claims 1 to 40,
**characterized by**
a pressure regulator system adapted to provide that fuel injection performed by the main fuel injection unit (31) is performed at a higher pressure than fuel injection performed by the sub-fuel injection unit (61).

42. Engine as claimed in Claim 41,
**characterized in that**
said pressure regulator system comprises a closed-loop piping (103) including a fuel delivery branch (103a) and a fuel return branch (103b), said fuel delivery branch (103a) connecting the main fuel injection unit (107) with the fuel tank (102) via a fuel pressurizing fuel pump (104) with a first pressure regulator (105) disposed downstream of the main fuel injection unit (107) and a second pressure regulator (106) disposed downstream of the first pressure regulator (105) from which the fuel recovery branch (103b) returns to the gasoline fuel tank (102) whereas the sub-fuel injection unit (114) connects to the fuel supply branch (103a) downstream of the first pressure regulator (105) but upstream of the second pressure regulator (106).

43. Engine as claimed in Claim 42,
**characterized in that**
the fuel pump (104), the first pressure regulator (105) and the second pressure regulator (106) are connected in series through the fuel supply branch (103a) of the closed-loop fuel piping (103) with the main fuel supply unit (107) being disposed upstream of the first pressure regulator (105) and the sub-fuel injection unit (114) being disposed upstream of the second pressure regulator (106).

44. Engine as claimed in at least one of the preceding Claims 41 to 43,
**characterized in that**
the control unit (147) is adapted to control the operation of the main and sub-fuel injection units (107,114) in response to engine operating conditions and to a differential presssure representing signal of a pressure sensor (137) detecting the pressure difference between fuel and pressurized air at an inlet side of the first pressure regulator (105).

45. Engine as claimed in Claim 44,
**characterized in that**
said second pressure regulator (106) regulate constant the pressure difference between the atmospheric pressure and the fuel pressure at the fuel inlet side of the second pressure regulator (106) and a pressure sensor (161) is provided to detect the pressure within the air intake passage (115).

46. Engine as claimed in at least one of the preceding Claims 41 to 45,
**characterized in that**
said first pressure regulator (105) has a body (123) comprising a first fuel regulating chamber (121) and an air regulating chamber (122) with the first fuel regulating chamber (121) being partitioned by a diaphragm (124) into a high presure chamber (121a) having a fuel inlet (125) and fuel outlet (126) connected with the fuel supply branch (103a) and a low pressure chamber (121b) communicated with the atmosphere (113) through a communicating port (127).

47. Engine as claimed in Claim 46,
**characterized in that**
the fuel outlet (126) of the first pressure regulator (105) is opened opposite to a center portion of the diaphragm (124) through a downwardly projecting cylinder portion (128), the mouth portion thereof being controlled by said diaphragm (124).

48. Engine as claimed in Claim 46,
**characterized in that**
said air regulating chamber (122) is partitioned by a diaphragm (124) into a high pressure chamber (122a) having an air inlet (132) and an air outlet (133), and a low pressure chamber (123) communicated to the atmosphere (113) through a communicating port (134).

49. Engine as claimed in Claim 48,
**characterized in that**
the air outlet (133) is opened opposite to the center portion of the diaphragm (131) by means of a cylinder portion (135), the mouth portion of which is controlled by said diaphragm (131).

50. Engine as claimed in at least one of the preceding Claims 41 to 49,
**characterized in that**
the second pressure regulator (106) has a body (138) defining a second fuel regulating chamber (139) which, through a diaphragm (140) is partitioned a high pressure chamber (139a) and a low pressure chamber (139b).

51. Engine as claimed in at least one of the preceding Claims 41 to 50,
**characterized in that**
the high pressure chamber (139a) of the second pressure regulator (106) is communicated with the fuel return branch (103b) through a fuel outlet (143) formed through the cylindrical portion (142) controlled by the diaphragm (140) while being communicated with the fuel supply branch (103a) through its fuel inlet (141).

52. A method of controlling fuel injection for an internal combustion engine, specifically a two-stroke cycle engine, comprising a main fuel injection unit (31) performing continued fuel injection during engine operation directly into the combustion chamber of the engine and a sub-fuel injection unit (61) adapted to inject additional fuel into an air intake passage under high speed and/or high load operating conditions of the engine performing fuel injection through the main fuel injection unit (31) only simultaneously with the start of injecting pressurized air or with a certain delay after said injection of pressurized air has started and said fuel injection provided through the main fuel injection (31) is terminated prior to the end of injecting pressurized air or simultaneously with the end of said pressurized air injection, said auxiliary fuel injection during high speed and/or high load engine operating conditions is controlled in response to engine parameters detected by a central unit which regulates the fuel pressure of main injection through the main fuel injection unit (31) to be higher than fuel pressure of sub-injection through the sub-fuel injection unit (61).

53. A method as claimed in Claim 52,
**characterized in that**
said sub-fuel injection unit (61) is activated to inject fuel into the air intake passage (19) of the engine when the main fuel injection unit (31) is inactive and the exhaust port (26) of each cylinder is closed.

54. A method as claimed in Claim 52,
**characterized in that**
fuel injection through the sub-fuel injection unit (61) in triggered in response to the opening degree of the throttle valve (21) exceeding a predetermined value.

55. A method as claimed in at least one of the preceding Claims 52 to 54,
**characterized in that**
the sub-fuel injection unit (61,114) is operated at a lower torque when the engine speed (12) increases.

## Patentansprüche

1. Brennkraftmaschine mit einem Kraftstoffeinspritzungs-System, um einer Brennkammer (28) der Brennkraftmaschine durch Steuern mittels einer Steuereinheit (63,147) Kraftstoff zuzuführen, wobei dieses Kraftstoffeinspritzungs-System eine Kraftstoffeinspritzungshaupteinheit (31,107) enthält, um Kraftstoff in die Brennkammer zuzuführen, sowie eine Kraftstoffeinspritzungsnebeneinheit (61,114) aufweist, um Kraftstoff einem mit der Brennkammer (28) kommunizierenden Kanal zuzuführen, **dadurch gekennzeichnet**, daß die Kraftstoffeinspritzungshaupteinheit (31,107) unter allen Motorbetriebszuständen betreibbar ist und Kraftstoff in Abhängigkeit von Motorparametern zuführt, die von der Steuereinheit erfaßt worden sind, wohingegen die Kraftstoffeinspritzungsnebeneinheit (61,114) zur Förderung zusätzlicher Kraftstoffmengen zu dem mit der Brennkammer (28) kommunizierten Kanal lediglich unter Hochgeschwindigkeits- und/oder Hochlast-Motorbetriebszuständen zusammen mit der Kraftstoffeinspritzungshaupteinheit (31,107) in Abhängigkeit von den von der Steuereinheit erfaßten Motorparametern betreibbar ist, während sowohl die Kraftstoffeinspritzungshaupteinheit (31,107) als auch die Kraftstoffeinspritzungsnebeneinheit (61,114) steuerbar sind durch ein Druckregulierungssystem, in dem der Einspritzdruck der Kraftstoffeinspritzungshaupteinheit (31,107) auf ein höheres Druckniveau gesteuert ist als dasjenige der Kraftstoffeinspritzungsnebeneinheit (61,114).

2. Brennkraftmaschine nach Anspruch 1, **dadurch gekennzeichnet**, daß ein Luftversorgungssystem vorgesehen ist, um jede Brennkammer mit Luft zu versorgen.

3. Brennkraftmaschine nach Anspruch 1, **dadurch gekennzeichnet**, daß die Kraftstoffeinspritzungshaupteinheit (31,107) ein Kraftstoffeinspritzungsnebensystem (37) sowie ein Nebensystem (38) zur Förderung druckbeaufschlagter Luft enthält, das dazu geeignet ist, den Zerstäubungsgrad des Kraftstoffs in einem Kraftstoff/Luft-Gemisch zu erhöhen, welches bevorzugt als ein Vorgemisch in die Brennkammer (21) einspritzbar ist.

4. Brennkraftmaschine nach mindestens einem der vorstehenden Ansprüche 1 bis 3, **dadurch gekennzeichnet**, daß die Kraftstoffeinspritzungsnebeneinheit (61,114) während einer Niedriggeschwindigkeit/Niedriglast-Betriebsbedingung des Motors einschließlich einer Leerlaufbedingung nicht betrieben wird.

5. Brennkraftmaschine nach mindestens einem der vorstehenden Ansprüche 1 bis 3, **dadurch gekennzeichnet**, daß die Kraftstoffeinspritzungshaupteinheit (31,107) mit einem Kraftstoffeinspritzungsnebensystem (37) versehen ist für die Kraftstoffeinspritzung sowie ein Lufteinspritzungsnebensystem (38) enthält, um unabhängig voneinander Luft einzuleiten.

6. Brennkraftmaschine nach Anspruch 5, **dadurch gekennzeichnet**, daß die Kraftstoffeinspritzungshaupteinheit (31) mit einem Kraftstoffkanal (58) versehen ist zur Kraftstoffversorgung sowie einen Luftkanal (53) aufweist zur Förderung komprimierter Luft und ein Einspritzventil (43) enthält zum Öffnen und Schließen dieser Kanäle (56,53), um zu ermöglichen, daß ein Luft/Kraftstoff-Gemisch direkt in die Brennkammer (28) des Motors mit einem darin zerstäubten Kraftstoff einspritzbar ist.

7. Brennkraftmaschine nach mindestens einem der vorstehenden Ansprüche 1 bis 6, **dadurch gekennzeichnet**, daß die Kraftstoffeinspritzungsnebeneinheit (61) Kraftstoff einem Kanal zuführt, der nur während eines Betriebsbereiches des Motors zu der Brennkammer (28) führt, in welchem Bereich die Öffnung eines Drosselventils (21) einen vorbestimmten Wert überschreitet.

8. Brennkraftmaschine nach mindestens einem der vorstehenden Ansprüche 1 bis 7, **dadurch gekennzeichnet**, daß der Motor ein Otto-Kraftstoffmotor ist.

9. Brennkraftmaschine nach Anspruch 8, **dadurch gekennzeichnet**, daß der Motor ein Dreizylinder-Motor ist.

10. Brennkraftmaschine nach mindestens einem der vorstehenden Ansprüche 1 bis 9, **dadurch gekennzeichnet**, daß die Kraftstoffeinspritzungsnebeneinheit (61) in der Mitte eines Kanals angeordnet ist, der von einem Spülluftschlitz (23a), der von der hin- und hergehenden Bewegung eines Kolbens (6) gesteuert wird, ausgehend zu einem Lufteinlaßkanal (19) führt, in dem ein Drosselventil (21) aufgenommen ist.

11. Brennkraftmaschine nach mindestens einem der vorstehenden Ansprüche 1 bis 10, **dadurch gekennzeichnet**, daß die Kraftstoffeinspritzungsnebeneinheit (61) dem Lufteinlaßkanal (19) des Motors zugeordnet ist, welcher Kanal (19) gebildet wird von einem Einlaßkrümmer (17) und röhrenförmigen Kanalabschnitten (16), um Frischluft in eine Kurbelkammer (7) des Motors einzuleiten.

12. Brennkraftmaschine nach Anspruch 11, **dadurch gekennzeichnet**, daß die Kraftstoffeinspritzungsnebeneinheit (61) an dem Einlaßkrümmer (17) stromaufwärts oder stromabwärts des darin aufgenommenen Drosselventils (21) angeordnet ist.

13. Brennkraftmaschine nach Anspruch 11, **dadurch gekennzeichnet**, daß die Kraftstoffeinspritzungsnebeneinheit (61) stromabwärts des Drosselventils (21) und stromaufwärts eines Klappenventils (22) angeordnet ist.

14. Brennkraftmaschine nach Anspruch 11, **dadurch gekennzeichnet**, daß die Kraftstoffeinspritzungsnebeneinheit (61) an einem Kurbelgehäuse (2) des Motors an einem Abschnitt (16) angeordnet ist, der einen Teil des Lufteinlaßkanals (19) bildet, sowie stromabwärts eines Klappenventils (22) positioniert ist, um in einen Lufteinlaßabschnitt der Kurbelkammer (9) hinein zu öffnen.

15. Brennkraftmaschine nach Anspruch 11, **dadurch gekennzeichnet**, daß die Kraftstoffeinspritzungsnebeneinheit (61) an dem Zylinderblock (3) des Motors angeordnet ist und in einen Spülkanal (23) hinein öffnet, dessen Spülluftschlitz (23a) einer Auslaßöffnung (261) des entsprechenden Zylinders (5) gegenüber angordnet ist.

16. Brennkraftmaschine nach mindestens einem der vorstehenden Ansprüche 1 bis 15, **dadurch gekennzeichnet**, daß die Kurbelkammer (7) mit jedem der Zylinder (5) mittels einer Vielzahl von Spülkanälen (21,24,25) verbunden ist, die entsprechend über Spülluftschlitze (23a,24a,25a) in die entsprechenden Zylinderkammern (5) hinein öffnen.

17. Brennkraftmaschine nach Anspruch 16, **dadurch gekennzeichnet**, daß jeder Zylinder (5) über drei Spülkanäle (23,24, 25) mit der Kurbelkammer (7) verbunden ist, von denen einer (23) gegenüber dem Auslaßkanal (26) in den Zylinder (5) hinein öffnet, während die anderen Spülkanäle (24,25) zu beiden Seiten dieses gegenüberliegend angeordneten Spülkanals (23) angeordnet sind.

18. Brennkraftmaschine nach mindestens einem der vorstehenden Ansprüche 1 bis 17, **dadurch gekennzeichnet**, daß das Kurbelgehäuse (2) einstückig mit sich seitlich erstreckenden Röhrenabschnitten (16) ausgebildet ist, wobei für jeden Zylinder (5) ein Röhrenabschnitt (16) vorgesehen ist, die die Kurbelkammer (7) mit der Umgebung verbinden, wobei jeder dieser Röhrenabschnitte (16) den stromabwärtigen Bereich des Lufteinlaßkanals (19) bilden, der an dem Lufteinlaßkrümmer (17) angeschlossen ist.

19. Brennkraftmaschine nach Anspruch 18, **dadurch gekennzeichnet**, daß der Lufteinlaßkrümmer (17) mehrfach gegabelt ist mit Abzweigungsabschnitten (17a), deren Anzahl der Anzahl der Zylinder des Motors enspricht, sowie mit einem Sammelabschnitt (17b) versehen ist, der über einen Lufteinlaß-Durchflußmesser (18) an dem Luftfilter angeschlossen ist.

20. Brennkraftmaschine nach Anspruch 19, **dadurch gekennzeichnet**, daß in jedem dieser Abzweigungsabschnitte (17a) des Lufteinlaßkrümmers (17) ein Drosselventil (21) angeordnet ist.

21. Brennkraftmaschine nach mindestens einem der vorstehenden Ansprüche 18 bis 20, **dadurch gekennzeichnet**, daß die Kraftstoffeinspritzungsnebeneinheit (61) an der stromabwärtigen Seite eines jeden Abzweigungsabschnitts (17a) des Lufteinlaßkrümmers (17) stromabwärts des Drosselventils (21) installiert ist, wenn dieses Drosselventil (21) in jedem der Abzweigungsabschnitte (17a) angeordnet ist, oder an dem Zylinderblock-Schürzenbereich durch die Wandung des Spülkanals (23), der zu den der Auslaßöffnung (26a) des Auslaßkanals (26) in gegenüberliegenden Spülluftschlitzen (23a) führt, oder an dem vorragenden Röhrenabschnitt (16) des Kurbelgehäuses (2), der ein Teil des Lufteinlaßkanals (19) bildet, um der Kurbelkammer (7) gegenüber zu liegen, oder an einem Abschnitt des Abzweigungsabschnitts (17a) stromaufwärts des Drosselventils (21).

22. Brennkraftmaschine nach mindestens einem der vorstehenden Ansprüche 18 bis 21, **dadurch gekennzeichnet**, daß der Lufteinlaßkrümmer (17) mehrfach gegabelt ausgebildet ist mit Abzweigungsabschnitten (17a) und einem Sammelabschnitt (17b), und daß ein Drosselventil (21) in jedem dieser Abzweigungsabschnitte (17a) angeordnet ist, daß eine Kraftstoffeinspritzungsnebeneinheit (61) an jedem dieser Abzweigungsabschnitte (17a) stromabwärts eines jeden Drosselventils (21) zusammen mit einem Drucksensor (62) installiert ist, der stromabwärts der Kraftstoffeinspritzungsnebeneinheit (61) bzw. stromaufwärts eines Klappenventils (22) angeordnet ist, wobei dieses Klappenventil- (22) die entsprechenden Abzweigungsabschnitte (17a) mit dem Kurbelgehäuse (2) des Motors verbindet.

23. Brennkraftmaschine nach mindestens einem der vorstehenden Ansprüche 18 und 19, **dadurch gekennzeichnet**, daß jeder Abzweigungsabschnitt (17a) des Lufteinlaßkrümmers (17) oberhalb eines Klappenventils (22) eine individuelle Kraftstoffeinspritzungsnebeneinheit (61) enthält, während ein gemeinsames Drosselventil innerhalb des Sammelabschnitts (17b) des Lufteinlaßkrümmers (17) stromabwärts eines Luftdurchflußmessers (18) angeordnet ist, wobei ein einzelner Drucksensor (22) an einem Zwischenabschnitt stromabwärts des Drosselventils (21) angeordnet ist, an welchem Zwischenabschnitt der Sammelabschnitt (17b) mit den einzelnen Abzweigungsabschnitten (17a) des Lufteinlaßkrümmers (17) zusammengeführt ist.

24. Brennkraftmaschine nach Anspruch 23, **dadurch gekennzeichnet**, daß eine einzelne Kraftstoffeinspritzungsnebeneinheit (61) an einem Zwischenabschnitt, an dem der Sammelabschnitt (17b) des Lufteinlaßkrümmers (17) mit den einzelnen Abzweigunsabschnitten (17a) zusammenläuft, angeordnet ist, wobei diese einzelne Kraftstoffeinspritzungsnebeneinheit (61) dazu ausgelegt ist, Kraftstoff in jeden der separaten Abzweigunsabschnitte (17a) des Lufteinlaßkrümmers (17) einzuspritzen, oder die einzelne Kraftstoffeinspritzungsnebeneinheit (61) ist stromaufwärts des Drosselventils (21) angeordnet.

25. Brennkraftmaschine nach Anspruch 24, **dadurch gekennzeichnet**, daß das Drosselventil (21) in dem Sammelabschnitt (17b) des Lufteinlaßkrümmers (17) zwischen einem Einlaßluft-Durchflußmesser (18) und dieser einzelnen Kraftstoffeinspritzungsnebeneinheit (61) angeordnet ist.

26. Brennkraftmaschine nach mindestens einem der vorstehenden Ansprüche 1 und 25, **dadurch gekennzeichnet**, daß ein Klappenventil (21) an dem Ende eines jeden dieser Abzweigungsabschnitte (17a) angeordnet ist, wobei jedes dieser Klappenventile (22) einen Ventilrahmen (22a) enthält, der zwischen dem stromaufwärtigen Ende des entsprechenden Röhrenabschnitts (16) des Kurbelgehäuses (2) und dem stromabwärtigen Ende des entsprechenden Abzweigungsabschnitts (17a) des Lufteinlaßkrümmers (17) befestigt ist.

27. Brennkraftmaschine nach Anspruch 26, **dadurch gekennzeichnet**, daß jedes Klappenventil (22) zwei Ventilklappen (22b) enthält, die an dem Ventilrahmen (22a) befestigt sind zum Öffnen und Schließen der Ventilöffnungen des Klappenventils (22) aufgrund deren elastischer Deformation.

28. Brennkraftmaschine nach mindestens einem der vorstehenden Ansprüche 1 und 27, **dadurch gekennzeichnet**, daß die Kraftstoffeinspritzungsnebeneinheit (61) ähnlich der Kraftstoffeinspritzungshaupteinheit (31) ausgelegt ist, einschließlich eines Fördersystems (38) für druckbeaufschlagte Luft, welches dazu geeignet ist, die Zerstäubung des von der Kraftstoffeinspritzungsnebeneinheit (61) in den Lufteinlaßkanal (19) eingespritzten Kraftstoffs zu verbessern.

29. Brennkraftmaschine nach mindestens einem der vorstehenden Ansprüche 1 und 28, **dadurch gekennzeichnet**, daß die Kraftstoffeinspritzungshaupteinheit (31) zentral am oberen Ende des Zylinderkopfes angeordnet ist und das Einspritzventil (23), den Ventilkopf (43a), der zur Brennkammer (28) weist, enthält, wohingegen eine Zündkerze an dem Zylinderkopf (4) seitlich der Kraftstoffeinspritzungshaupteinheit (31) befestigt ist.

30. Brennkraftmaschine nach Anspruch 29, **dadurch gekennzeichnet**, daß die Brennkammer (28) eine Kuppelform aufweist, wobei die Kraftstoffeinspritzungshaupteinheit (31) einen Luft/Kraftstoff-Nebel im wesentlichen an dem oberen Ende der Brennkammer (28) einspritzt.

31. Brennkraftmaschine nach mindestens einem der vorstehenden Ansprüche 1 und 30, **dadurch gekennzeichnet**, daß die Kraftstoffeinspritzungshaupteinheit (31) einheitlich das Kraftstoffeinspritzungsnebensystems (37) zum Einspritzen von Kraftstoff und das Einspritznebensystem (38) für druckbeaufschlagte Luft miteinander kombiniert, wobei beide Systeme unabhängig voneinander steuerbar sind, daß ein Kraftstoffkanal (58) des Kraftstofförder-Nebensystems (37) in einen anderen Kraftstoffkanal (56) eines Einspritzventil-Lagerteils (45) hinein öffnet, um aus einer Kraftstoffdüse (59) herauszuspritzen, die durch einen Ventilsitz (45a) des Einspritzventils (43) in Richtung auf den Ventilteil (43a) des Einspritzventils (43) weisend ausgebildet ist, wobei Kraftstoff eingespritzt wird in einen Luftauslaß eines Druckluftkanals, der zwischen dem Ventilteil (43a) und dem Ventilsitz (45a) des Ventillagerteils (45) ausgebildet ist, wenn der Ventilteil (43a) sich öffnet, um ein Luft/Kraftstoff-Gemisch, das zerstäubte Kraftstofftröpfchen enthält, in die Brennkammer (28) einzuspritzen.

32. Brennkraftmaschine nach mindestens einem der vorstehenden Ansprüche 1 und 31, **dadurch gekennzeichnet**, daß ein Steuersystem vorhanden ist, das sowohl diese Steuereinheit (63) als auch einen ersten Druckregulator (36) einschließt, der stromabwärts der Kraftstoffeinspritzungshaupteinheit (31) angeordnet und dazu geeignet ist, nichtverbrauchten Kraftstoff einem Kraftstofftank (33) rückzuführen und um nichtbenutzte Druckluft an die Atmosphäre abzugeben.

33. Brennkraftmaschine nach Anspruch 32, **dadurch gekennzeichnet**, daß dieser erste Druckregulator (36) dazu ausgelegt ist, den Druck der komprimierten Luft für die Kraftstoffhaupteinspritzung konstant zu halten, während der Kraftstoffdruck um einen bestimmten Betrag höher gehalten wird als der Druck der komprimierten Luft.

34. Brennkraftmaschine nach Anspruch 33, **dadurch gekennzeichnet**, daß die Kraftstoffeinspritzungshaupteinheit (31) durch einen Luftkompressor (12) mit komprimierter Luft versorgt wird, welcher Luftkompressor (12) über einen V-Riemen durch die Kurbelwelle (8) angetrieben wird.

35. Brennkraftmaschine nach Anspruch 34, **dadurch gekennzeichnet**, daß die Kraftstoffeinspritzungshaupteinheit (31) mit druckbeaufschlagtem Kraftstoff versorgt wird über eine primäre Kraftstoffpumpe (35), die zwischen einem Kraftstofffilter (34), welches wiederum Kraftstoff aus dem Kraftstofftank (33) entnimmt, und der Kraftstoffeinspritzungshaupteinheit (31) angeordnet ist.

36. Brennkraftmaschine nach mindestens einem der vorstehenden Ansprüche 1 und 35, **dadurch gekennzeichnet**, daß eine sekundäre Kraftstoffpumpe (69) zwischen dem Luftfilter (32) und der primären Kraftstoffpumpe (35) angeschlossen und dazu ausgebildet ist, der Kraftstoffeinspritzungsnebeneinheit (61) druckbeaufschlagten Kraftstoff zuzuführen.

37. Brennkraftmaschine nach Anspruch 36, **dadurch gekennzeichnet**, daß ein zweiter Druckregulator (70) in der Mitte zwischen der sekundären Kraftstoffpumpe (69) und der Kraftstoffeinspritzungsnebeneinheit (61) angeordnet ist, wobei dieser Druckregulator (70) in bezug auf den Atmosphärendruck den Kraftstoffdruck innerhalb der Rohrleitung konstant hält und einen Teil des Kraftstoff dem Kraftstofftank (33) rückführt, wenn der Kraftstoffdruck innerhalb der Rohrleitung einen vorbestimmten Wert übersteigt.

38. Brennkraftmaschine nach mindestens einem der vorstehenden Ansprüche 1 und 37, **dadurch gekennzeichnet**, daß die Steuereinheit (63) ein Signal von mindestens einem Drucksensor (62), der den Druck in dem Lufteinlaßkanal (19) erfaßt, von einem Drosselventilöffnungsdetektor (64), von einem Kurbelwinkeldetektor (65) und von einem Lufteinlaß-Durchflußmesser (18) empfängt, um die Kraftstoffeinspritzungshaupteinheit (31) und die Kraftstoffeinspritzungsnebeneinheit (61) in einer Weise zu steuern, daß die Kraftstoffeinspritzungsnebeneinheit (61) nur innerhalb eines Bereiches aktiviert ist, in dem die Öffnung des Drosselventils (21) einen vorbestimmten Wert übersteigt, um Kraftstoff in den Lufteinlaßkanal (19) zu fördern.

39. Brennkraftmaschine nach Anspruch 38, **dadurch gekennzeichnet**, daß der Drucksensor (62) stromabwärts des Drosselventils (21) stromaufwärts oder stromabwärts der Kraftstoffeinspritzungsnebeneinheit (61) angeordnet ist, um in dem Lufteinlaßkanal (19) den Differenzdruck zwischen der Kraftstoffeinspritzungsnebeneinheit (61) und dem Röhrenabschnitt (16) des Kurbelgehäuses (2) konstant zu halten.

40. Brennkraftmaschine nach Anspruch 39, **dadurch gekennzeichnet**, daß die Kraftstoffeinspritzungsnebeneinheit (61) an dem Röhrenabschnitt (16) des Kurbelgehäuses (2) oder an der Wandung des Spülkanals (23) des Zylinderblock-Schürzenabschnitts installiert ist und daß der Drucksensor (79) bezüglich der Achse der Kurbelwelle (8) im wesentlichen diametral an dem unteren Abschnitt des Kurbelgehäuses (2) positioniert ist.

41. Brennkraftmaschine nach mindestens einem der vorstehenden Ansprüche 1 und 40, **gekennzeichnet durch** ein Druckregulierungssystem, das dazu ausgelegt ist, daß die von der Kraftstoffeinspritzungshaupteinheit (31) durchgeführte Kraftstoffeinspritzung mit einem höheren Druck durchgeführt wird als die von der Kraftstoffeinspritzungsnebeneinheit (61) durchgeführte Kraftstoffeinspritzung.

42. Brennkraftmaschine nach Anspruch 41, **dadurch gekennzeichnet**, daß das Druckregulierungssystem ein RegelkreisRohrsystem (103) enthält, einschließlich einer Kraftstofförderableitung (103a) und einer Kraftstoffrückführungsableitung (103b), wobei diese Kraftstofförderableitung (103a) die Kraftstoffeinspritzungshaupteinheit (107) mit dem Kraftstofftank (102) über eine den Kraftstoff mit Druck beaufschlagenden Kraftstoffpumpe (104) verbindet, wobei ein erster Druckregulator (105) stromabwärts der Kraftstoffeinspritzungshaupteinheit (107) und ein zweiter Druckregulator (106) stromabwärts des ersten Druckregulators (105) angeordnet ist, von welchem die Kraftstoffrückführungsableitung (103b) zu den Otto-Kraftstofftank (102) zurückführt, während die Krafstoffeinspritzungsnebeneinheit (114) an der Kraftstoffförderableitung (103a) stromabwärts des ersten Druckregulators (105), aber stromaufwärts des zweiten Druckregulators (106) angeschlossen ist.

43. Brennkraftmaschine nach Anspruch 42, **dadurch gekennzeichnet**, daß die Kraftstoffpumpe (104), der erste Druckregulator (105) und der zweite Druckregulator (106) über die Kraftstofförderableitung (103a) der Regelkreis-Kraftstoffrohrleitung (103) in Reihe verbunden sind, wobei die Kraftstoffeinspritzungshaupteinheit (107) stromaufwärts des ersten Druckregulators (105) und die Kraftstoffeinspritzungsnebeneinheit (114) stromaufwärts des zweiten Druckregulators (106) angeordnet sind.

44. Brennkraftmaschine nach mindestens einem der vorstehenden Ansprüche 41 und 43, **dadurch gekennzeichnet**, daß die Steuereinheit (147) dazu ausgelegt ist, den Betrieb der Kraftstoffeinspritzungshaupt- und -nebeneinheiten (107, 114) in Abhängigkeit von den Motorbetriebszuständen und von einem Differenzdruck zu steuern, der ein Signal eines Drucksensors (137) darstellt, der die Druckdifferenz zwischen dem Kraftstoff und der druckbeaufschlagten Luft auf einer Einlaßseite des ersten Druckregulators (105) erfaßt.

45. Brennkraftmaschine nach Anspruch 44, **dadurch gekennzeichnet**, daß der zweite Druckregulator (106) die Druckdifferenz zwischen dem Atmosphärendruck und dem Kraftstoffdruck an der Kraftstoffeinlaßseite des zweiten Druckregulators (106) konstant hält und daß ein Drucksensor (161) vorhanden ist, um den Druck innerhalb des Lufteinlaßkanals (115) zu erfassen.

46. Brennkraftmaschine nach mindestens einem der vorstehenden Ansprüche 41 und 45, **dadurch gekennzeichnet**, daß der erste Druckregulator einen Körper (123) aufweist, der eine erste Kraftstoffregulationskammer (121) und eine Luftregulationskammer (122) enthält, wobei die erste Kraftstoffregulationskammer (121) von einer Membran (124) in eine Hochdruckkammer (121a), die einen Kraftstoffeinlaß (125) und einen Kraftstoffauslaß (126) enthält, der mit der Kraftstofförderableitung (103a) verbunden ist, und in eine Niedrigdruckkammer (121b) aufgeteilt ist, die über eine Vebindungsöffnung (127) mit der Umgebungsatmosphäre verbunden ist.

47. Brennkraftmaschine nach Anspruch 46, **dadurch gekennzeichnet**, daß der Kraftstoffauslaß (126) des ersten Druckregulators (105) sich gegenüber einem zentralen Abschnitt der Membran (124) durch einen sich nach unten erstreckenden Zylinderabschnitt (128) hindurch öffnet, wobei dessen Öffnungsabschnitt von dieser Membran (124) gesteuert wird.

48. Brennkraftmaschine nach Anspruch 46, **dadurch gekennzeichnet**, daß die Luftregulationskammer (122) von einer Membran (124) aufgeteilt ist in eine Hochdruckkammer (122a), die einen Lufteinlaß (132) und einen Luftauslaß (133) aufweist, und in eine Niedrigdruckkammer (123), die über eine Verbindungsöffnung (134) mit der Umgebungsatmosphäre (113) verbunden ist.

49. Brennkraftmaschine nach Anspruch 48, **dadurch gekennzeichnet**, daß der Luftauslaß (133) gegenüber des zentralen Abschnitts der Membran (131) mittels eines Zylinderabschnitts (135) geöffnet ist, wobei dessen Öffnungsabschnitt von dieser Membran (131) gesteuert wird.

50. Brennkraftmaschine nach mindestens einem der vorstehenden Ansprüche 1 bis 49, **dadurch gekennzeichnet**, daß der zweite Druckregulator (106) einen Körper (138) aufweist, der eine zweite Kraftstoffregulationskammer (139) begrenzt, welche durch eine Membran (140) aufgeteilt ist in eine Hochdruckkammer (139a) und in eine Niedrigdruckkammer (139b).

51. Brennkraftmaschine nach mindestens einem der vorstehenden Ansprüche 41 bis 50, **dadurch gekennzeichnet**, daß die Hochdruckkammer (139) des zweiten Druckregulators (106) über einen Kraftstoffauslaß (143), der durch den zylindrischen Abschnitt (142) ausgeformt ist und von der Membran (140) gesteuert wird, mit der Kraftstoffrückführungsableitung (103b) verbunden ist, während diese Hochdruckkammer (139a) über ihren Kraftstoffeinlaß (141) mit der Kraftstofförderableitung (103a) verbunden ist.

52. Verfahren zur Steuerung der Kraftstoffeinspritzung einer Brennkraftmaschine, insbesondere einer Zweitaktbrennkraftmaschine, mit einer Kraftstoffeinspritzungshaupteinheit (31), die während des Motorbetriebs kontinuierlich die Kraftstoffeinspritzung direkt in die Brennkammer des Motors durchführt, und mit einer Kraftstoffeinspritzungsnebeneinheit (61), die dazu ausgelegt ist, unter Hochgeschwindigkeits- und/oder Hochlast-Betriebsbedingungen des Motors in einen Lufteinlaßkanal zusätzlichen Kraftstoff einzuspritzen, wobei diese Kraftstoffeinspritzungsnebeneinheit (61) die Kraftstoffeinspritzung mit der Kraftstoffeinspritzungshaupteinheit (31) nur simultan mit dem Beginn der Einspritzung druckbeaufschlagter Luft oder mit einer gewissen Verzögerung, nachdem die Einspritzung druckbeaufschlagter Luft begonnen worden ist, durchführt, wobei die durch die Kraftstoffeinspritzungshaupteinheit (31) durchgeführte Kraftstoffeinspritzung vor dem Ende der Enspritzung druckbeaufschlagter Luft oder gleichzeitig mit dem Ende der Einspritzung druckbeaufschlagter Luft beendet wird, wobei ferner die Einspritzung zusätzlichen Kraftstoffs während der Hochgeschwindigkeits- und/oder Niedriglast-Motorbetriebsbedingungen gesteuert wird in Abhängigkeit von Motorparametern, die von einer Zentraleinheit erfaßt werden, welche den Kraftstoffdruck der Haupteinspritzung durch die Kraftstoffeinspritzungshaupteinheit (31) höher einstellt als den Kraftstoffdruck der Nebeneinspritzung durch die Kraftstoffeinspritzungsnebeneinheit (61).

53. Verfahren nach Anspruch 52, **dadurch gekennzeichnet**, daß die Kraftstoffeinspritzungsnebeneinheit (61) aktiviert ist, um in den Lufteinlaßkanal (19) des Motors Kraftstoff einzuspritzen, wenn die Kraftstoffeinspritzungshaupteinheit (31) nicht aktiviert ist und die Auslaßöffnung (26) eines jeden Zylinders geschlossen ist.

54. Verfahren nach Anspruch 52, **dadurch gekennzeichnet**, daß die Kraftstoffeinspritzung durch die Kraftstoffeinspritzungsnebeneinheit (61) in Abhängigkeit von dem Öffnungsgrad des Drosselventils (21) eingeleitet wird, wenn dieser Öffnungsgrad einen vorbestimmten Wert übersteigt.

55. Verfahren nach mindestens einem der vorstehenden Ansprüche 52 bis 54, **dadurch gekennzeichnet**, daß die Kraftstoffeinspritzungsnebeneinheit (61,114) mit einem geringeren Drehmoment betrieben wird, wenn die Motorgeschwindigkeit (12) ansteigt.

## Revendications

1. Moteur à combustion interne comprenant un système d'injection de carburant pour fournir du carburant à une chambre de combustion (28) du moteur, sous la commande d'une unité de commande (63, 147), ledit système d'injection de carburant comprenant une unité principale d'injection de carburant (31, 107) fournissant du carburant à la chambre de combustion et une unité secondaire d'injection de carburant (61, 114) fournissant du carburant à un passage communicant avec la chambre de combustion (28),
caractérisé en ce que
l'unité principale d'injection de carburant (31, 107) est actionnée dans toutes les conditions de fonctionnement du moteur fournissant du carburant en réponse aux paramètres de moteur détectés par l'unité de commande, tandis que l'unité secondaire d'injection de carburant (61, 114) prévue pour fournir des quantités supplémentaires de carburant audit passage communiquant avec la chambre de combustion (28) est actionnée seulement dans des conditions de fonctionnement du moteur à une vitesse élevée et/ou une charge élevée, conjointement avec l'unité principale d'injection de carburant (31, 107), en réponse à des paramètres de moteur détectés par l'unité de commande, tandis que, à la fois l'unité principale d'injection de carburant (31, 107) et l'unité secondaire d'injection de carburant (61, 114) sont commandées par un système régulateur de pression, dans lequel la pression d'injection de l'unité principale d'injection de carburant (31, 107) est commandée à un niveau de pression plus élevée que l'unité secondaire d'injection de carburant (61, 114).

2. Moteur selon la revendication 1, caractérisé en ce qu'un système d'amenée d'air est prévu pour amener de l'air à chaque chambre de combustion.

3. Moteur selon la revendication 1, caractérisé en ce que l'unité principale d'injection de carburant (31 107) comprend un système secondaire d'injection de carburant (37) et un système secondaire d'amenée d'air comprimé (38), adapté pour améliorer l'atomisation du carburant dans un mélange carburant/air, de préférence injecté dans la chambre de combustion (21) sous la forme d'un prémélange.

4. Moteur selon au moins l'une des revendications 1 à 3 précédentes, caractérisé en ce que l'unité secondaire d'injection de carburant (61, 114), n'est pas actionnée pendant que le moteur se trouve en un état de fonctionnement à faible vitesse/faible, y compris un état de marche au ralenti.

5. Moteur selon au moins l'une des revendications 1 à 3 précédentes, caractérisé en ce que l'unité principale d'injection de carburant (31, 107) est pourvue d'un système secondaire d'injection de carburant (37) conçu pour injecter du carburant et d'un système d'injection d'air (38) secondaire conçu pour injecter de l'air, indépendamment l'un de l'autre.

6. Moteur selon la revendication 5, caractérisé en ce que l'unité principale d'injection de carburant (31) est pourvue d'un passage de carburant (58) prévu pour fournir du carburant et un passage d'air (53) prévu pour fournir de l'air comprimé, et d'une soupape d'injection (43) pour ouvrir et fermer ces passages (56, 53), permettant à un mélange air/carburant d'être injecté directement dans la chambre de combustion (28) du moteur dans laquelle le carburant y est atomisé.

7. Moteur selon au moins l'une des revendications 1 à 6 précédentes, caractérisé en ce que l'unité secondaire d'injection de carburant (61) fournit du carburant à un passage menant à la chambre de combustion (28), seulement durant une plage de fonctionnement du moteur dans laquelle l'ouverture d'une soupape d'étranglement (21) dépasse une valeur prédéterminée.

8. Moteur selon au moins l'une des revendications 1 à 7 précédentes, caractérisé en ce que le moteur est un moteur à essence.

9. Moteur selon la revendication 8, caractérisé en ce que le moteur est un moteur à trois cylindres.

10. Moteur selon au moins l'une des revendications 1 à 9 précédentes, caractérisé en ce que l'unité secondaire d'injection de carburant (61) est disposée à mi-chemin d'un passage partant d'une lumière de balayage (23a) qui est commandée par le déplacement en va et vient d'un piston (6), vers un passage d'admission d'air (19) logeant en son sein une soupape d'étranglement (21).

11. Moteur selon au moins l'une des revendications 1 à 10 précédentes, caractérisé en ce que l'unité secondaire d'injection de carburant (61) est associée au passage d'admission d'air (19) du moteur, formé par un collecteur d'admission (17) et des parties de passage (16) en forme de tube, pour introduire de l'air frais dans une chambre de vilebrequin (7) du moteur.

12. Moteur selon la revendication 11, caractérisé en ce que l'unité secondaire d'injection de carburant (61) est disposée au niveau du collecteur d'admission (17), en amont ou en aval de la soupape d'étranglement (21) y étant logée.

13. Moteur selon la revendication 11, caractérisé en ce que l'unité secondaire d'injection de carburant (61) est disposée en aval de la soupape d'étranglement (21) en amont d'une valve à membrane (22).

14. Moteur selon la revendication 11, caractérisé en ce que l'unité secondaire d'injection de carburant (61) est disposée au niveau du carter de vilebrequin (2) du moteur, sur une partie (16) définissant une partie du passage d'admission d'air (19), et est disposée en aval d'une valve à membrane (22), pour déboucher dans la partie d'admission d'air de la chambre de vilebrequin (7).

15. Moteur selon la revendication 11, caractérisé en ce que l'unité secondaire d'injection de carburant (61) est disposée au niveau du bloc cylindre (3) du moteur, débouchant dans un passage de balayage (23), dont la lumière de balayage (23a) est disposée à l'opposé d'un orifice d'échappement (261) du cylindre (5) respectif.

16. Moteur selon au moins l'une des revendications 1 à 15 précédentes, caractérisé en ce que la chambre de vilebrequin (7) est mise en communication avec chacun des cylindres (5) au moyen d'une pluralité de passages de balayage (23, 24, 25) débouchant dans le cylindre (5), respectivement via des lumières de balayage (23a, 24a, 25a).

17. Moteur selon la revendication 16, caractérisé en ce que chaque cylindre (5) est mis en communication avec la chambre de vilebrequin (7), par trois passage de balayage (23, 24, 25), l'un d'entre eux (23) débouchant dans le cylindre (5) à l'opposé du passage d'échappement (26), tandis que les autres passages de balayage (24, 25) sont disposés des deux côtés dudit passage de balayage (23) disposé à l'opposé.

18. Moteur selon au moins l'une des revendications 1 à 17 précédentes, caractérisé en ce que le carter de vilebrequin (2) est formé d'un seul tenant avec des parties de tube (16) faisant saillies latéralement, une pour chaque cylindre (5), établissant une communication entre la chambre de vilebrequin (7) et l'extérieur, chacune desdites parties de tube (16) définissant la section aval du passage d'admission d'air (19) connecté au collecteur d'admission d'air (17).

19. Moteur selon la revendication 18, caractérisé en ce que le collecteur d'admissions d'air (17) est réalisé sous la forme de fourches multiples ayant des ramifications (17a), dont le nombre correspond au nombre de cylindres du moteur, et une partie de réunion (17b) connectée, via un débitmètre d'admission d'air (18), à un filtre à air.

20. Moteur selon la revendication 19, caractérisé en ce qu'une soupape d'étranglement (21) est disposée dans chacune des parties de ramification (17a) du collecteur d'admission d'air (17).

21. Moteur selon au moins l'une des revendications 18 à 20 précédentes, caractérisé en ce que l'unité secondaire d'injection de carburant (61) est installée sur le côté aval de chaque partie de ramification (17a) du collecteur d'admission d'air (17), en aval de la soupape d'étranglement (21), et est disposée dans chacune des parties de ramification (17a) ou au niveau de la section de jupe de bloc de cylindre, via la paroi du passage de balayage (23) menant à la lumière de balayage (23a) opposée à l'orifice d'échappement (26a) du passage d'échappement (26), ou au niveau de la partie de tube (16) saillante du carter de vilebrequin (2) définissant une partie du passage d'admission d'air (19), pour être tournée vers la chambre de vilebrequin (7), ou au niveau d'une partie de la partie de ramification (17a) en amont de la soupape d'étranglement (21).

22. Moteur selon au moins l'une des revendications 18 à 21 précédentes, caractérisé en ce que le collecteur d'admission d'air et réalisé sous la forme de fourches multiples avec des ramifications (17a) et une partie de réunion (17b), et une soupape d'étranglement (21) est disposée dans chacune des parties de ramification (17a) et une unité secondaire d'injection de carburant (61) est installée sur chacune des parties de ramification (17a) en aval de chacune des soupapes d'étranglement (21), conjointement avec un capteur de pression (62) disposé en aval de l'unité secondaire d'injection de carburant (61) et en amont d'une valve à membrane (22), respectivement, ladite valve à membrane (22) établissant une communication entre les parties de ramifications (17a) respectives et le carter de vilebrequin (2) du moteur.

23. Moteur selon au moins l'une des revendications 18 et 19 précédentes, caractérisé en ce que chaque partie de ramification (17a) du collecteur d'admission d'air (17) comprend une unité secondaire d'injection de carburant (61) individuelle an amont d'une valve à membrane (22), tandis qu'une soupape d'étranglement commune est disposée dans la partie de réunion (17b) du collecteur d'admission d'air (17) en aval d'un débitmètre d'air (18), tandis qu'un capteur de pression (62) unique est disposé sur une partie intermédiaire en aval de la soupape d'étranglement (21), reliant la partie de réunion (17b) aux parties de ramification (17a) séparées du collecteur d'admission d'air (17).

24. Moteur selon la revendication 23, caractérisé en ce qu'une unité secondaire d'injection de carburant (61) unique est disposée sur une partie intermédiaire reliant la partie de réunion (17b) du collecteur d'admission d'air (17) à ses parties de ramification (17a) individuelles, ladite unité secondaire d'injection de carburant (61) unique étant adaptée pour injecter du carburant dans chacune des parties de ramification (17a) séparées du collecteur d'admission d'air (17), ou bien ladite unité secondaire d'injection de carburant (61) unique est disposée en amont de la soupape d'étranglement (21).

25. Moteur selon la revendication 24, caractérisé en ce que la soupape d'étranglement (21) est disposée dans la partie de réunion (17b) du collecteur d'admission d'air (17), entre un débitmètre d'air d'admission (18) et ladite unité secondaire d'injection de carburant (61) unique.

26. Moteur selon au moins l'une des revendications 1 à 25 précédentes, caractérisé en ce qu'une valve à membrane (22) est disposée à l'extrémité de chacune des parties de ramification (17a), respectivement, chacune desdites valves à membrane (22) comprenant un cadre de valve (22a), fixé entre l'extrémité amont de la partie de tube (16) respective du carter de vilebrequin (2), et l'extrémité aval de la partie de ramification (17a) respective du collecteur d'admission d'air (17).

27. Moteur selon la revendication 26, caractérisé en ce que chaque valve à membrane (22) comprend deux membranes de valve (22b) fixées au cadre de valve (22a) pour ouvrir et fermer les orifices de valve de la valve à membrane (22), en raison de leur déformation élastique.

28. Moteur selon au moins l'une des revendications 1 à 27 précédentes, caractérisé en ce que l'unité secondaire d'injection de carburant (61) est conçue de manière analogue à l'unité principale d'injection de carburant (31), comprenant un système d'amenée d'air comprimé (38) adapté pour améliorer l'atomisation du carburant injecté dans le passage d'admission d'air (19) via l'unité secondaire d'injection de carburant (61).

29. Moteur selon au moins l'une des revendications 1 à 28 précédentes, caractérisé en ce que l'unité principale d'injection de carburant (31) est disposée centralement au sommet de la culasse, y compris la soupape d'injection (43), la tête de soupape (43a) tournée vers la chambre de combustion (28), tandis que la bougie d'allumage est montée sur la culasse (4), latéralement par rapport à l'unité principale d'injection de carburant (31).

30. Moteur selon la revendication 29, caractérisé en ce que la chambre de combustion (22) présente une forme bombée, tandis que l'unité principale d'injection de carburant (31) injectant un mélange air/carburant se trouve sensiblement au sommet de la chambre de combustion (28).

31. Moteur selon au moins l'une des revendications 1 à 30 précédentes, caractérisé en ce que l'unité principale secondaire d'injection de carburant (31) combine intégralement le système d'injection de carburant (37) conçu pour injecter du carburant et le système secondaire d'injection d'air comprimé (38), ces deux systèmes étant commandés indépendamment, tandis qu'un passage de carburant (58) du sous-système d'amenée de carburant (37) débouche dans un autre passage de carburant (56) d'un organe de support de soupape d'injection (45), pour la projection depuis une buse de carburant (59) formée dans un siège de soupape (45a) de la soupape d'injection (43), vers l'opercule (43a) de la soupape d'injection (43) injectant du carburant dans une sortie d'air d'un passage d'air comprimé formé entre l'opercule (43a) et le siège de soupape (45a) de l'organe support de soupape (45), lorsque l'opercule (43a) s'ouvre pour injecter un mélange air/carburant contenant des gouttelettes de carburant atomisé dans la chambre de combustion (28).

32. Moteur selon au moins l'une des revendications 1 à 31 précédentes, caractérisé en ce qu'un système de commande est prévu, comprenant ladite unité de commande (63) ainsi qu'un premier régulateur de pression (36) disposé en aval de l'unité principale d'injection de carburant (31), adaptée pour amener le carburant non utilisé à un réservoir de carburant (33) et pour évacuer l'air comprimé non utilisé vers l'atmosphère.

33. Moteur selon la revendication 32, caractérisé en ce que ledit premier régulateur de pression (36) est adapté pour maintenir constante la pression d'air comprimé pour l'injection de carburant principale, tout en maintenant la pression de carburant selon une valeur définie supérieure à la pression de l'air comprimé.

34. Moteur selon la revendication 33, caractérisé en ce que ladite unité principale d'injection de carburant (31) reçoit de l'air comprimé au moyen d'un compresseur à air (12) entraîné par le vilebrequin (8), via une courroie trapézoïdale.

35. Moteur selon la revendication 34, caractérisé en ce que ladite unité principale d'injection de carburant (31) reçoit du carburant pressurisé par une pompe à carburant (35) principale, disposée entre un filtre de carburant (34) qui tire à son tour du carburant depuis le réservoir de carburant (33), et l'unité principale d'injection de carburant (31).

36. Moteur selon au moins l'une des revendications 1 et 35 précédentes, caractérisé en ce qu'une pompe à carburant (69) secondaire est connectée entre le filtre à air (32) et la pompe à carburant (35) principale, adaptée pour fournir du carburant pressurisé à l'unité secondaire d'injection de carburant (61).

37. Moteur selon la revendication 36, caractérisé en ce qu'un deuxième régulateur de pression (70) est disposé à mi-chemin entre la pompe à carburant (69) secondaire et l'unité secondaire d'injection de carburant (31), ledit régulateur de pression (70) maintenant constante la pression de carburant dans le tube, par rapport à la partie de retour de pression atmosphérique du carburant vers le réservoir de carburant (33), lorsque la pression de carburant dans le tube dépasse une valeur prédéterminée.

38. Moteur selon au moins l'une des revendications 1 à 37 précédentes, caractérisé en ce que l'unité de commande (63) reçoit des signaux à partir d'au moins un capteur de pression (62) mesurant une pression dans le passage d'admission d'air (19), à partir d'un détecteur d'ouverture de soupape d'étranglement (64) d'un détecteur d'angle de vilebrequin (65) et d'un débitmètre d'admission d'air (18), en vue de commander l'unité principale d'injection de carburant (31) et l'unité secondaire d'injection de carburant (61), de manière que l'unité secondaire d'injection de carburant (61) soit actionnée pour fournir du carburant au passage d'admission d'air (19), seulement dans une plage dans laquelle l'ouverture de la soupape d'étranglement (21) dépasse un niveau prédéterminé.

39. Moteur selon la revendication 38, caractérisé en ce que le capteur de pression (62) est disposé en aval de la soupape d'étranglement (21), en amont ou en aval de l'unité secondaire d'injection de carburant (61), en vue de maintenir constante la pression différentielle dans le passage d'admission d'air (19), à partir de l'unité secondaire d'injection de carburant (61) vers la partie de tube (16) du carter de vilebrequin (2).

40. Moteur selon la revendication 39, caractérisé en ce que l'unité secondaire d'injection de carburant (61) est installée sur la partie de tube (16) du carter de vilebrequin (2), ou bien la paroi du passage de balayage (23) de la section de jupe de bloc de cylindre, et le capteur de pression (79) est disposé sensiblement diamétralement par rapport à l'axe du vilebrequin (8), au niveau de la partie inférieure du carter de vilebrequin (2).

41. Moteur selon au moins l'une des revendications 1 à 40 précédentes, caractérisé par un système de régulation de pression, adapté pour assurer que l'injection de carburant effectuée par l'unité principale d'injection de carburant (31) est faite à une pression supérieure à celle de l'injection de carburant effectuée par l'unité secondaire d'injection de carburant (61).

42. Moteur selon la revendication 41, caractérisé en ce que ledit système de régulation de pression comprend un tuyau en boucle fermée (103) comprenant une ramification d'amenée de carburant (103a) et une ramification de renvoie de carburant (103b), ladite ramification d'amenée de carburant (103a) connectant l'unité principale d'injection de carburant (107) au réservoir de carburant (102), via une pompe à carburant de pressurisation de carburant (104), avec un premier régulateur de pression (105) disposé en aval de l'unité principale d'injection de carburant (107) et un deuxième régulateur de pression (106) disposé en aval du premier régulateur de pression (105), à partir duquel la ramification de retour de carburant (103b) renvoie le carburant vers le réservoir d'essence (102), tandis que l'unité secondaire d'injection de carburant (114) est connectée à la ramification d'amenée de carburant (103a) en aval du premier régulateur de pression (105), mais en amont du deuxième régulateur de pression (106).

43. Moteur selon la revendication 42, caractérisé en ce que la pompe à carburant (104), le premier régulateur de pression (105) et le deuxième régulateur de pression (106) sont connectés en série, via la ramification d'amenée de carburant (103a) du tuyau de carburant en boucle fermée (103), à l'unité principale d'amenée de carburant (107) disposée en amont du premier régulateur de pression (105) et l'unité secondaire d'injection de carburant (114) disposée en amont du deuxième régulateur de pression (106).

44. Moteur selon au moins l'une des revendications 41 à 43 précédentes, caractérisé en ce que l'unité de commande (147) est adaptée pour commander le fonctionnement des unités principale et secondaire d'injection de carburant et (107, 114), en réponse aux conditions de fonctionnement du moteur et à un signal représentatif de la pression différentielle d'un capteur de pression (137), détectant la différence de pression entre le carburant et l'air comprimé du côté d'admission du premier régulateur de pression (105).

45. Moteur selon la revendication 44, caractérisé en ce que ledit deuxième régulateur de pression (106) régule à une valeur constante la différence de pression entre la pression atmosphérique et la pression de carburant au niveau du côté d'admission de carburant du deuxième régulateur de pression (106), et un capteur de pression (106) est prévu pour mesurer la pression dans la pression dans le passage d'admission d'air (115).

46. Moteur selon au moins l'une des revendications 41 à 45 précédentes, caractérisé en ce que ledit premier régulateur de pression (105) présente un corps (123) comprenant une première chambre de régulation de carburant (121) et une chambre de régulation d'air (122), la première chambre de régulation de carburant (121) étant divisée, par un diaphragme (124), en une chambre à haute pression (121a) ayant une entrée de carburant (125) et une sortie de carburant (126) connectée à la ramification d'amenée de carburant (103a) et une chambre de basse pression (121b) communiquant avec l'atmosphère (113) via un orifice de communication (127).

47. Moteur selon la revendication 46, caractérisé en ce que la sortie de carburant (126) du premier régulateur de pression (105) est ouverte à l'opposé d'une partie centrale du diaphragme (124), via une partie de cylindre (128) saillante vers le bas, sa partie d'embouchure étant contrôlée par ledit diaphragme (124).

48. Moteur selon la revendication 46 caractérisé en ce que ladite chambre de régulation d'air (122) est subdivisée, par un diaphragme (124), en une chambre à haute pression (122a) ayant une entrée d'air (132) et une sortie d'air (133), et une chambre à basse pression (123) communiquant avec l'atmosphère (113) via un orifice de communication (134).

49. Moteur selon la revendication 48, caractérisé en ce que la sortie d'air (133) est ouverte à l'opposé de la partie centrale du diaphragme (131) au moyen d'une partie de cylindre (135), dont la partie d'embouchure est contrôlée par ledit diaphragme (131).

50. Moteur selon au moins l'une des revendications 41 à 49 précédentes, caractérisé en ce que le deuxième régulateur de pression (100) présente un corps (138) définissant une deuxième chambre de régulation de carburant (139) qui, via un diaphragme (140), est séparé en une chambre à haute pression (139a) et une chambre à basse pression (139b).

51. Moteur selon au moins l'une des revendications 41 à 50 précédentes, caractérisé en ce que la chambre de haute pression (139a) du deuxième régulateur de pression (106) est mise en communication avec la ramification de renvoie de carburant (103b) via une sortie de carburant (143), formée dans la partie cylindrique (142) contrôlée par le diaphragme (140), tout en communiquant avec la ramification d'amenée de carburant (103a) via son entrée de carburant (141).

52. Procédé de commande d'une injection de carburant pour un moteur à combustion interne, spécifiquement un moteur à deux temps, comprenant une unité principale d'injection de carburant (31) exécutant une injection de carburant continue durant un fonctionnement de moteur, directement dans la chambre de combustion du moteur, et une unité secondaire d'injection de carburant (61), adaptée pour injecter du carburant supplémentaire dans un passage d'admission d'air, dans des conditions de fonctionnement sous haute vitesse et/ou charge élevée du moteur exécutant l'injection de carburant, via l'unité principale d'injection de carburant (31), seulement simultanément vis-à-vis du début de l'injection d'air comprimé ou avec un certain retard après que ladite injection d'air comprimé ait démarré, et ladite injection de carburant effectuée par l'unité principale d'injection (31) est terminée avant la fin de l'injection d'air comprimé ou simultanément avec la fin de ladite injection d'air comprimé, ladite injection auxiliaire de carburant faite durant des conditions de fonctionnement de moteur sous vitesse élevée et/ou charge élevée étant commandée en réponse à des paramètres de moteur détectés par une unité centrale qui régule la pression de carburant de l'injection principale, via l'unité principale d'injection de carburant (31), pour être supérieur à la pression de carburant de l'injection secondaire, via l'unité secondaire d'injection de carburant (61).

53. Procédé selon la revendication 52, caractérisé en ce que ladite unité secondaire d'injection de carburant (61) est actionnée pour injecter du carburant directement dans le passage d'admission d'air (19) du moteur, lorsque l'unité principale d'injection de carburant (31) est inactive et que l'orifice d'échappement (26) de chaque cylindre est fermé.

54. Procédé selon la revendication 52, caractérisé en ce que l'injection de carburant faite via l'unité secondaire d'injection de carburant (61) est déclenchée en réponse au dépassement d'une valeur prédéterminée concernant le degré d'ouverture de la soupape d'étranglement (21).

55. Procédé selon au moins l'une des revendications 52 à 54 précédentes, caractérisé en ce que l'unité secondaire d'injection de carburant (61, 114) est actionnée à une valeur devenant plus faible du couple lorsque la vitesse de moteur (12) augmente.
